# EUROPEAN PATENT SPECIFICATION

(11) **EP 1 204 111 B1**
(45) Date of publication and mention of the grant of the patent: **02.05.2007**
(21) Application number: 00937214.5
(22) Date of filing: 14.06.2000
(51) Int. Cl.: G11B 20/00, G06F 1/00

(54) **ENCRYPTION METHOD AND EQUIPMENT, DECRYPTION EQUIPMENT**
VERSCHLÜSSELUNGSVERFAHREN UND -VORRICHTUNG, ENTSCHLÜSSELUNGSVORRICHTUNG
PROCEDE ET DISPOSITIF DE CRYPTAGE, DISPOSITIF DE DECRYPTAGE

(30) Priority: 23.06.1999 JP 17747099; 10.11.1999 JP 31951499
(43) Date of publication of application: 08.05.2002
(73) Proprietor: Mitsubishi Kagaku Media Co., Ltd., Tokyo 108-0014 (JP)
(72) Inventor: KANAYAMA, Masaaki, Mitsubishi Chemical Corp., Yokohama-shi Kanagawa 227-8502 (JP); FUJIWARA, Tsuyoshi, Mitsubishi Chemical Corp, Yokohama-shi Kanagawa 227-8502 (JP)
(74) Representative: Finck, Dieter
(86) International application number: PCT/JP2000/003846
(87) International publication number: WO 2000/079532

(56) References cited:
- EP-A- 0 561 685
- EP-A- 0 773 490
- EP-A- 0 802 527
- EP-A- 0 809 244
- EP-A- 1 058 254
- WO-A-00/23993
- WO-A-99/55055
- JP-A- 6 208 760
- JP-A- 7 085 574
- JP-A- 10 021 144
- JP-A- 11 096 675

## Description

### Technical Field

The present invention relates to a method for encryption on a recording medium, encryption equipment, decryption equipment and audio/visual/data equipment, which are suitable for CD-R (CD-Recordable), CD-RW (CD-Rewritable), recordable DVD (Digital Versatile Disc), and others.

### Background Art

In the recent years, CD-R (which will sometimes be referred to as "CD-R media" or "CD-R disc") and CD-RW (which will sometimes be referred to as "CD-RW media" or "CD-RW disc"), which allow optical writing of data, have been developed as products, and they have activated the market, together with read only music CDs, CD-ROMs and others.

This group is called a CD family, including types such as CDDA, CD-MIDI, CDV, CD-G and CD-ROM. The CDDA is the so-called music CD, and is for recording/readout of a digital audio signal. The CD-MIDI, CDV and CD-G are for recording/readout in personal computers, whereas the CD-ROM is a read only memory, and photo-CD, Video-CD and others based thereon have been put to use.

The CD-R or CD-RW, by contrast, is designed to allow a user to write therein. The appearance thereof already permits CD creation even in office or home.

The CD-R is readable with a CD-ROM drive mounted in a personal computer, and enables the recording of a large volume of data. On the other hand, inconveniences exist in that it has a design of write-once, inhibits the erase of data once recorded, and defies its re-use after being inadvertently written and after becoming unnecessary.

On the other hand, the CD-RW, unlike the CD-R, permits the rewrite of data. This CD-RW permits the erasure of data 1000 times or more and enables the temporary retention of a large volume of data or the trial write of data, whereas its cost is higher than that of the CD-R and the readout therefrom depends upon only a handling drive such as a CD-RW drive.

In addition, recently, a read only DVD (Digital Versatile Disc) or DVD-ROM, which has a capacity of several times of that of the CD, has been put as a product on the market. A user writable medium equivalent to such high-density media has been in active development. For example, a write-once medium such as DVD-R or 1000-times or more rewritable medium such as DVD-RAM or DVD-RW has been on the development.

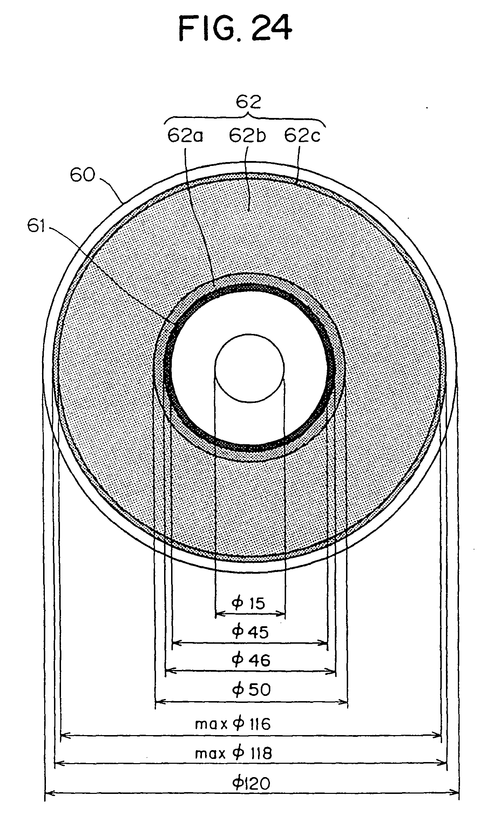

Secondly, as an example, with respect to a CD-R/RW, referring to FIGs. 24 to 26, a description will be given hereinbelow of a procedure of data writing and physical format. In the following explanation and drawings, two: a CD-R and aCD-RW, will sometimes be referred to generally as a "CD-R/RW".

FIG. 24 is an illustration of an arrangement of a non-data area and a data area in a CD-R/RW. In FIG. 24, a disc 60 has an administration area 61 and a user area 62.

The administration area 61 is an area which disallows a user the direct readout/writing, and comprises a PCA (Power Calibration Area) and a PMA (Program Memory Area).

In this case, the PCA retains control information for adjusting the intensity of laser at writing of data. The laser intensity is optimized on the basis of the information recorded in this PCA to agree with the external factors such as a coloring matter of a CD-R disc, a power supply voltage and an operating temperature.

In addition, in a portion of a PMA of a CD-R disc or CD-RW disc, a disc ID (Disc Identification) for identifying an individual disc is recorded with six digits in decimal number, 19.9 bits, by means of a CD-R/RW drive at the first writing.

The user area 62 (see FIG. 24) is for recording the actual data such as audio data.

Moreover, the user area 62 comprises a lead-in area 62a, a data area 62b and a lead-out area 62c. The data area 62b is a recording area for the actual data.

When data is written in the data area 62b, information such as a data start time and a stop time are recorded in each of the lead-in area 62a and the lead-out area 62c. For the writing of data, the lead-in area 62a and the lead-out area 62c are paired with each other and treated as one unit (called a session).

Among writing approaches in this disc, there are a disc-at-once method, a track-at-once method and a packet write method. The disc-at-once method is a method in which data is written at a stretch in a direction from a central portion of a disc to an outer circumference thereof, while the track-at-once method is a method in which data is first written and then control information (lead-in) for 60 seconds and control information (lead-out) for 90 or 30 seconds are added to before and after that data. Moreover, the packet write method is a method in which the recording is made repeatedly in a short data unit by the further improvement of the track-at-once method. In the case of a CD-R, data is recorded in succession after the data written previously, while for a CD-RW, as well as a floppy disc or the like, data is recorded randomly in every place of a disc.

When the writing is made according to the disc-at-once method, since data cannot be written in the remaining portion even if a free capacity exists in the CD-R/RW disc, it is preferable to, when a free capacity is left in the CD-R/RW disc, employ the track-at-once method or the packet write method for additional writing.

In addition, a session-at-once method similar to the track-at-once method, which records a lead-in, data and a lead-out in this order, has been recognized recently.

The aforesaid lead-in area 62a corresponds to the first area of each session on a CD-R, and nothing is written therein. Moreover, before the writing in the session reaches completion, the next writing address on the disc is placed therein, and when the writing in the session reaches completion, a TOC is written therein.

This TOC (Table Of Contents) signifies information to be written in the user area 62 and information on track numbers, start times and stop times. Moreover, the number of tracks recorded in the CD, the start times thereof and others are recorded in the TOC, and this TOC functions as a table of contents of a session.

The lead-out area 62c is an area positioned at the last portion of a session, and is used to indicate the arrival at the end of the data. Incidentally, no data is written therein.

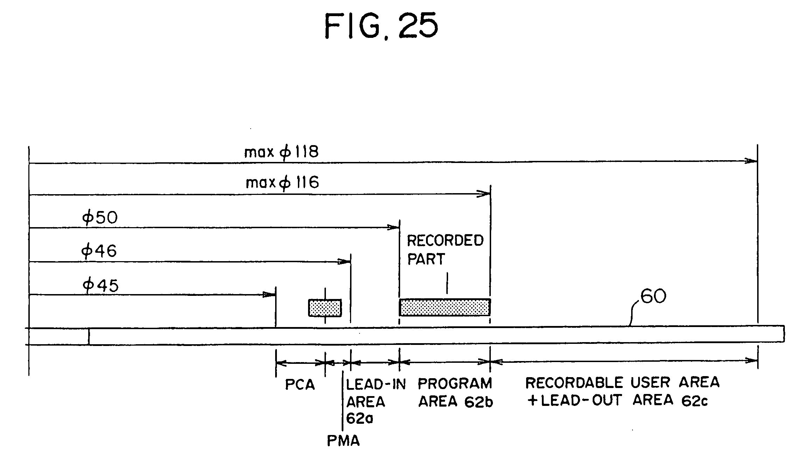

FIG. 25 is an illustration of a data structure of a disc in the middle of writing. The left side of FIG. 25 shows the center of a disc 60, a PCA, a PMA, a lead-in area 62a, a data area (program area) 62b and a lead-out area 62c are arranged in the order of separating from the center thereof, with the rightmost side thereof forms the outer edge. Mesh-like bands shown in FIG. 25 represent that data is written therein, and in the middle of the writing on the CD-R, the PCA, data is written in the PMA and the data area 62b and information on track number, start time and stop time are preserved temporarily.

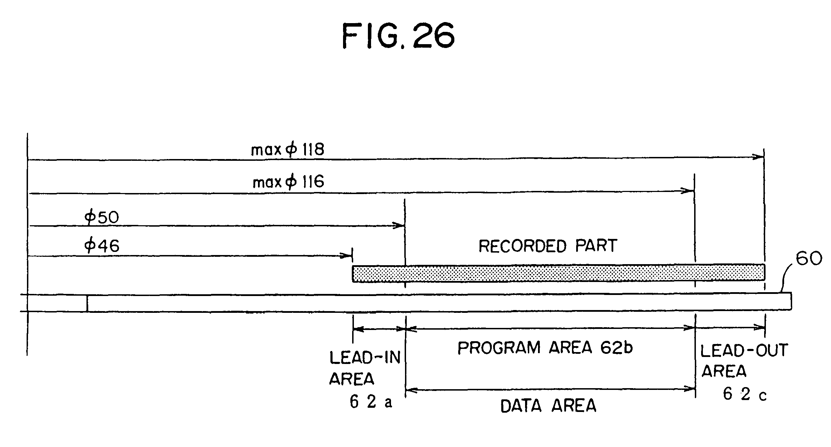

FIG. 26 is an illustration of a data structure of the disc after the completion of the writing. Nothing is written in the PCA and PMA on the disc 60, while a TOC is written in the lead-in area 62a, and audio data or the like is written in the data area 62b, and further an end position is written in the lead-out area 62c.

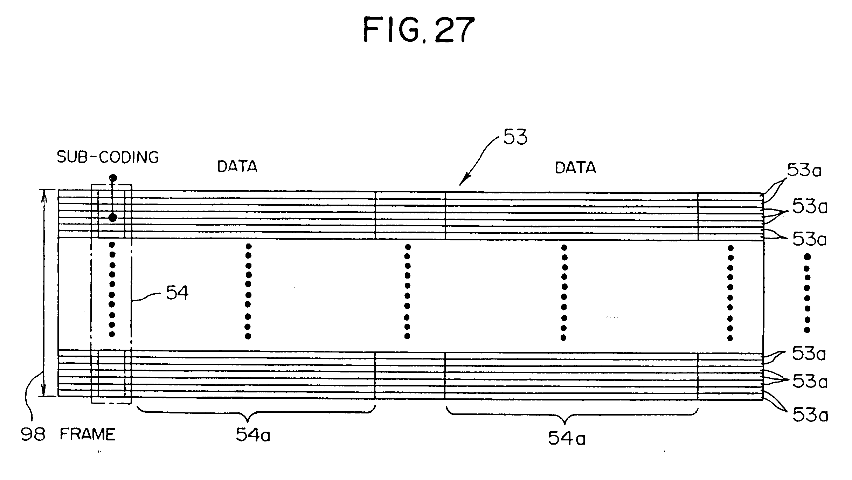

Meanwhile, in conjunction with the above-mentioned physical format, the data recording is made in units of blocks (sectors). Furthermore, this logical format will be described hereinbelow with reference to FIGs. 27 to 38.

FIG. 27 is an illustration of a format of a sub-coding frame. A block (sector) 53 shown in FIG. 27 is composed of 98 frames 53a. Moreover, the block 53 includes a sub-coding area 54 and data areas 54a. The data areas 54a are for recording data such as music.

In addition, the sub-coding area 54 is for recording information such as pauses, track numbers, indexes, times and characters, and is recorded together with data such as music in the data area 62b (see FIG. 24). This sub-coding area 54 is not used singly (at every partition), but one information is represented with respect to 98 consecutive frames.

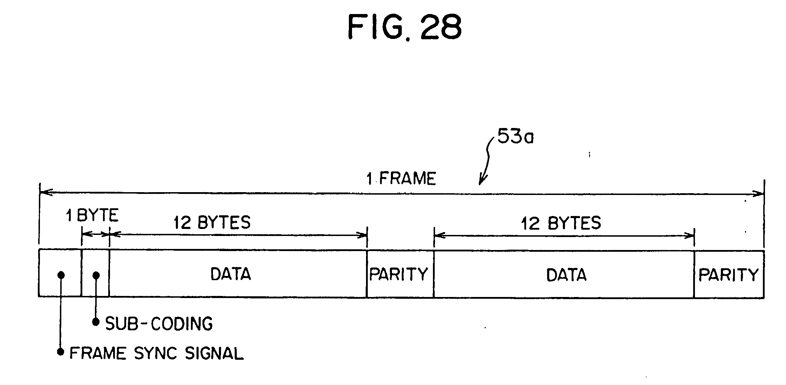

FIG. 28 is an illustration of a detailed format of frames 53a. The frames 53a shown in FIG. 28 have areas for frame sync patterns, sub-coding, data, parity, data and parity. Moreover, it has 1-byte sub-coding area and 24-byte data area. The frames 53a, which are 98 in number and grouped, organize a 2352 (24×98)-byte block 53, and function as an information area on pauses, track numbers, indexes, times and characters.

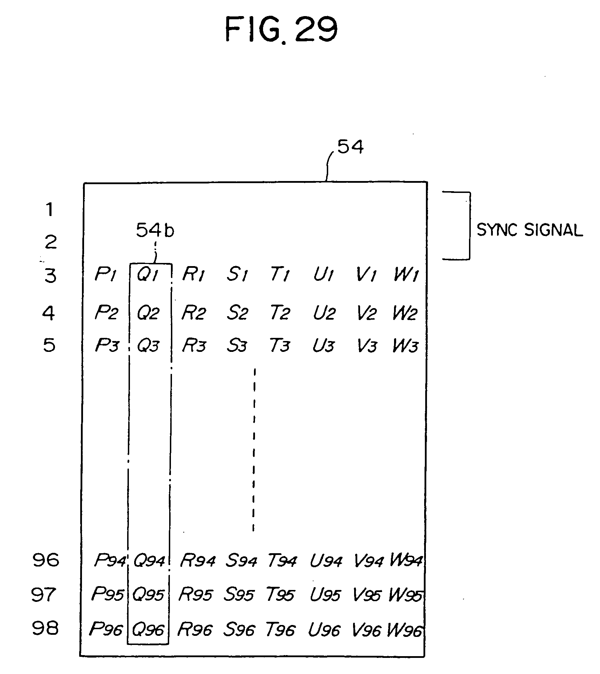

FIG. 29 is a detailed illustration of the sub-coding area. In the sub-coding area 54 shown in FIG. 29, a sync signal is stored in the first two-byte area while information is recorded in the other area. Concretely, these channels are as follows. That is, a P-channel is for recording a pause interposed between tunes, while a Q-channel is for recording tune track numbers, index numbers in tracks, executing times on the frames of tunes, absolute times and other information. Moreover, R, S, T, U, V and W retain character information for karaoke display.

As indicated by an area 54b in FIG. 29, one bundle extending in a vertical direction, marked with frame 3 to frame 98, forms one channel. That is, 96 bits from Q1 to Q96 form a Q-channel. Moreover, the channels P, R, S, T, U, V and W are made in likewise manner.

Furthermore, a description will be given hereinbelow of modes of the Q-channel. This Q-channel has three types of modes different in format, from a mode 1 to a mode 3. The Q-channel usually takes the mode 1, but employs the mode 2 or the mode 3 at a constant frequency.

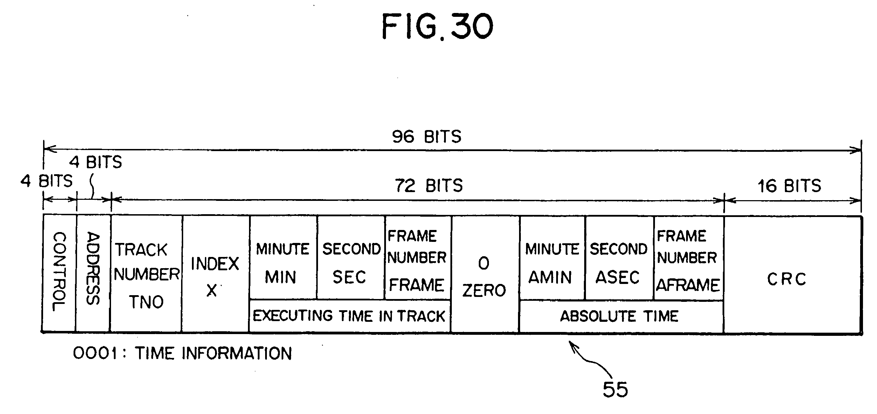

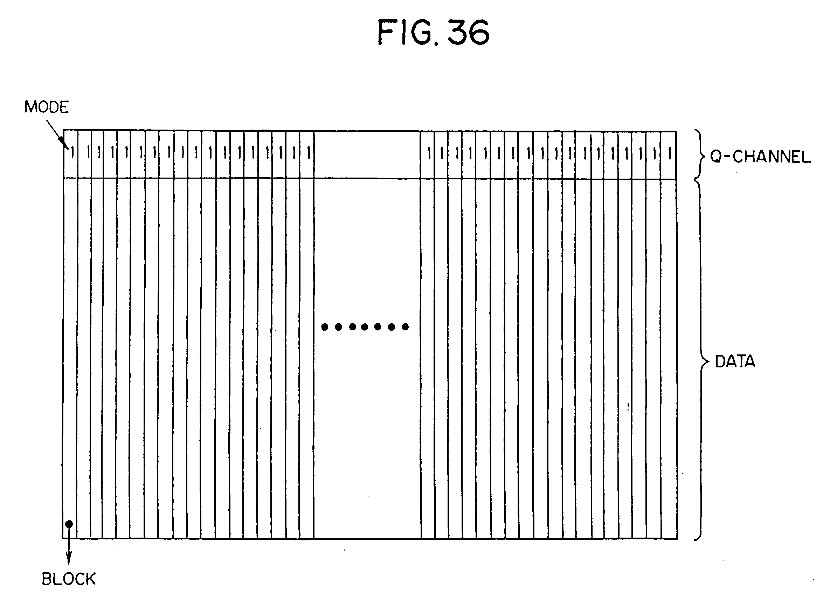

FIG. 30 is an illustration of a frame structure in the mode 1 of the Q-channel. Information is communicated with a frame 55 in the mode 1 shown in FIG. 30. FIG. 36 is an illustration of a first example of data recording. As FIG. 36 shows, the recording in the Q-channel area is made in the mode 1, while data is stored in the data area.

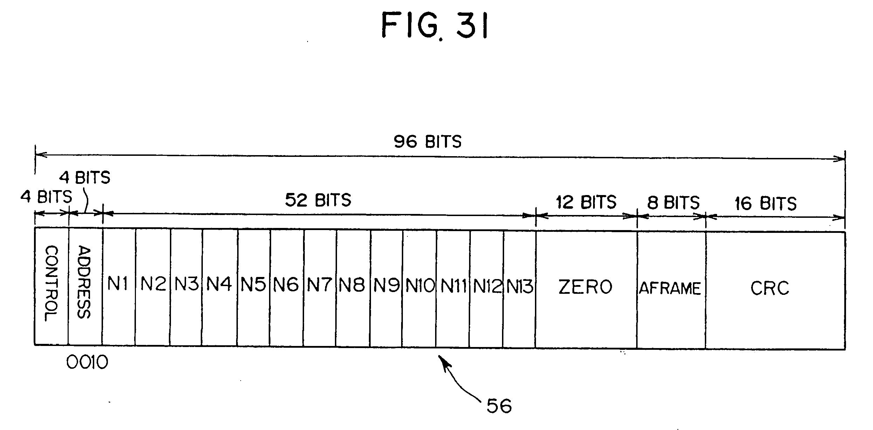

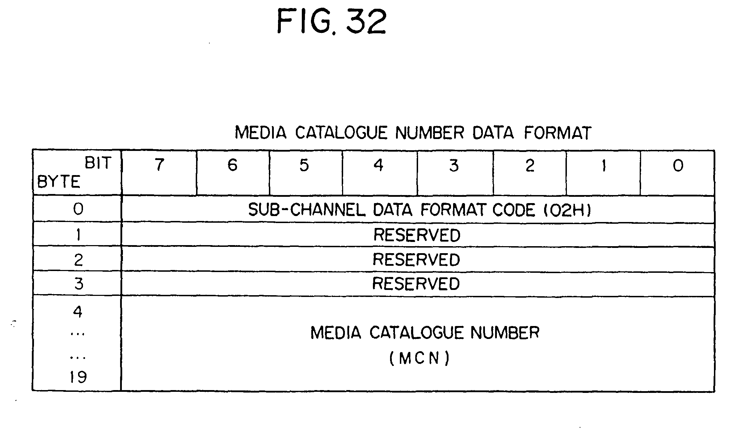

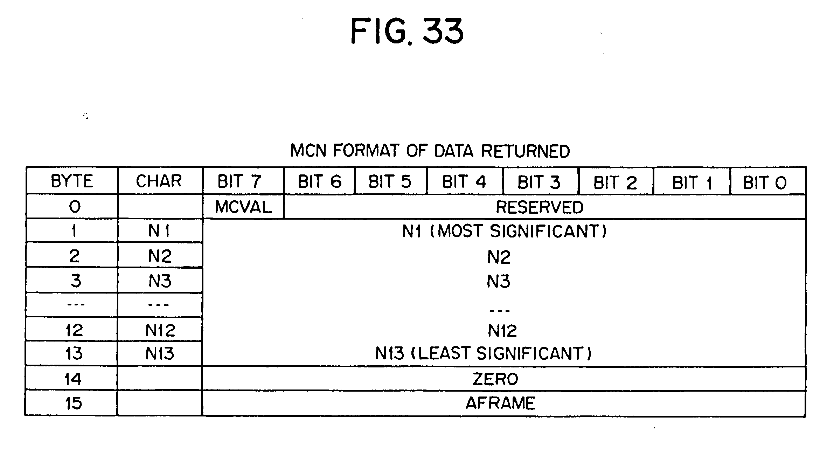

FIG. 31 is an illustration of a frame structure in the mode 2 of the Q-channel. A frame 56 in the mode 2 shown in FIG. 31 has a form different from that of the frame 55, and the frequency this frame 56 appears is at least one block per 100 blocks in the Q-channel. Moreover, in FIG. 31, each of N1 to N13 represents a 4-bit area. In these areas N1 to N13, an MCN (Media Catalog Number) is recorded with decimal thirteen digits (43.2 bits). The MCN is a media number identifier. Moreover, FIG. 32 is an illustration of a data format to be taken for when a drive equipment records an MCN. When the drive equipment makes the recording according to this data format, in fact the frame structure shown in FIG. 31 is recorded on the disc. Still moreover, FIG. 33 is an illustration of a format for an MCN data read by the drive equipment, showing a data format at the readout of a frame structure.

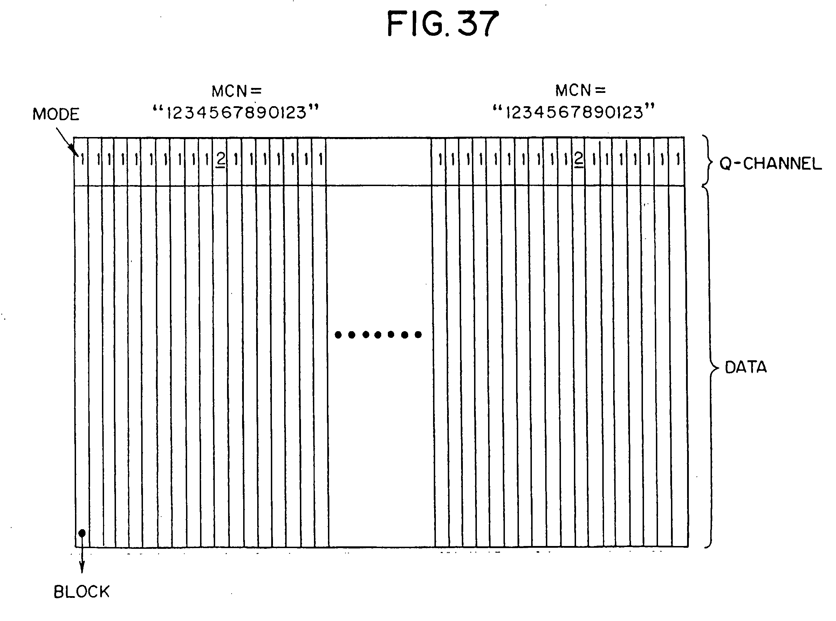

FIG. 37 is an illustration of a second example of data recording. As FIG. 37 shows, the recording is made in the mode 2 between the modes 1 in the Q-channel area. Moreover, in this case, an MCN, for example, 1234567890123, is placed in the data in the mode 2.

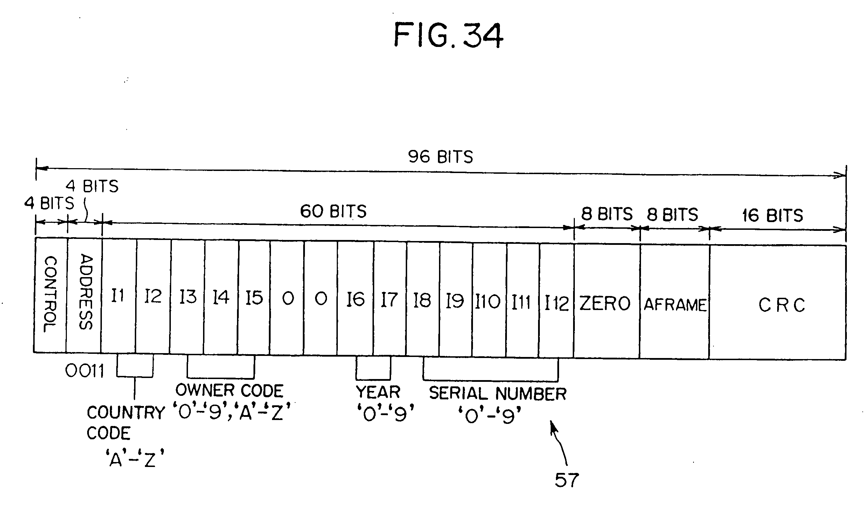

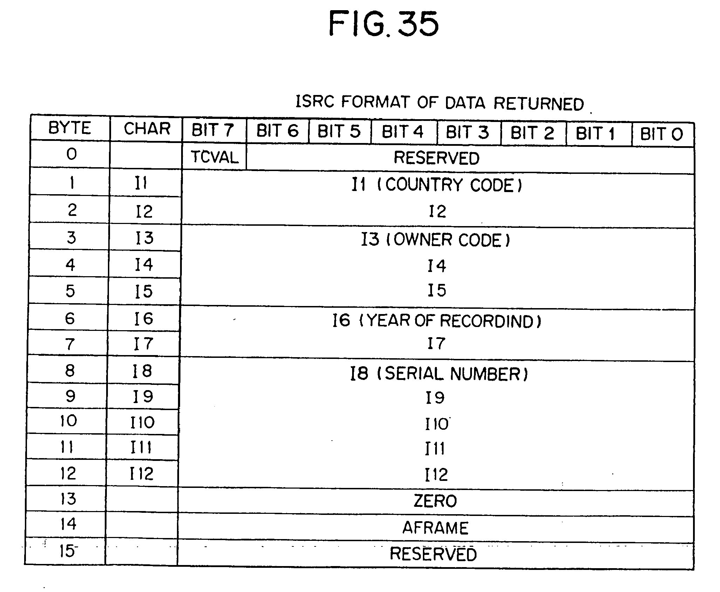

FIG. 34 is an illustration of a frame structure in the mode 3 of the Q-channel. The frequency a frame 57 in the mode 3 shown in FIG. 34 appears is also at least one block per 100 blocks in the Q-channel. Moreover, in I1 to I12 of the frame 57, the ISRC (International Standard Recording Code) is recorded, and 18 to I12 of these, a serial number is recorded with decimal five digits (16.6 bits). In this connection, in the areas of I1 to I5, information is recorded with six bits, while in the areas of I6 to I12, information is recorded with four bits. FIG. 35 is an illustration of a format for ISRC data read by a drive equipment, and in the areas of I8 to I12 shown in FIG. 35, a serial number is written with decimal five digits.

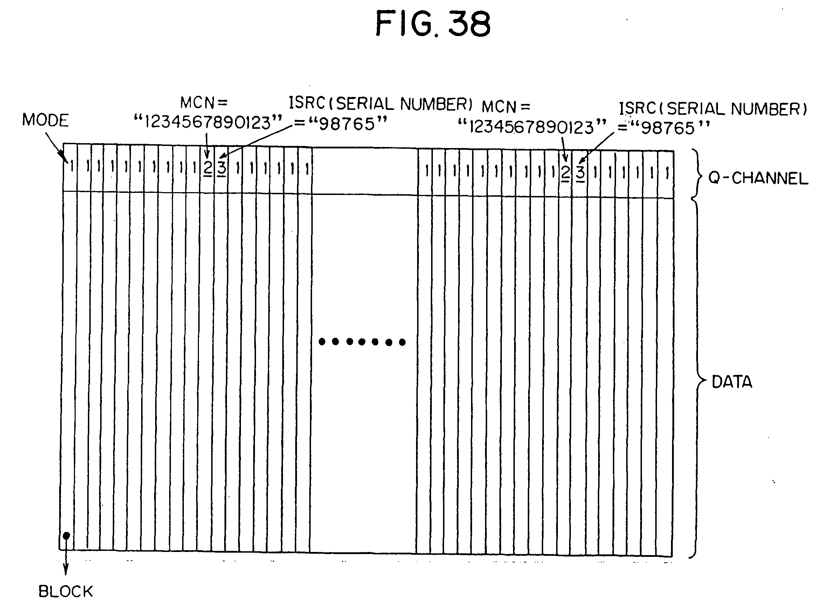

FIG. 38 is an illustration of a third example of data recording. As FIG. 38 shows, the recording is made in the mode 2 between the modes 1 in the Q-channel area, and further is made in the mode 3. Moreover, in this case, an MCN (for example, 1234567890123) is written in the data in the mode 2, while an ISRC serial number, for example, 98765, is put in the data in the mode 3.

As mentioned above, the CD-R/RW, of which the formats are standardized, shows an excellent compatibility and is very easy to handle.

There is a problem arising with this CD-R/RW, however, in that the user individuals can easily duplicate the work such as music, movie and computer program data, which makes difficult the satisfactory protection of the work.

As a method of protecting the data involved in the work, for example, there have been known an approach in which a copyright fee is previously added to the recording/readout equipment or an approach in which encryption information is added to a data array when copied. However, the approach of previously adding the copyright fee thereto creates a problem in that the determination of the copyright fee is verydifficult, while the approach of adding the cipher information to the data array when copied creates a problem in that no effective protecting means exists when copied in the analog manner. Thus, both do not reach the radical solution for duplicate prevention.

With respect to the data recording, following prior art is known.

From EP 0 802 527 A1 is known an optical disk having auxiliary data recording areas, where different IDs for individual disks, and/or cipher keys and/or decoding keys for ciphers are recorded in advance in a factory. By using the IDs to release the soft ciphers, using the cipher keys when sending the ciphers, and using the decoding keys when receiving the ciphers, user authorization procedures can be carried out.

From EP 0 809 244 A2 is known a software copying system which enables copyrighted software recorded in a master storage mdium to be copied to a user's target storage medium in a legitimate manner. A contents identifier reading unit reads out a software identifier from the master storage medium, while a storage medium identifier reading unit reads out a storage medium identifier from the target storage medium. The two identifiers are then sent to a central site which manages licenses for the right to copy software products. At the central site, a signature generating unit produces a first signature from those identifiers and sends it back to the user's site, where a signature writing unit writes the received signature into the target storage medium. A signature generating/comparing unit produces a second signature out of the same identifiers as those sent to the central site, and compares it with the first signature stored in the target storage medium. A data copying unit copies the subject software data file from the master storage medium to the target storage medium, only when the first and second signatures coincide with each other.

EP 0 561 685 A2 relates to a electronic data protection system including a storage medium for storing an encrypted electronic data, a medium number and encrypted permission information, a vendor computer having a personal key generating unit for generating a medium key based on the medium number, an electronic data decrypting key, and an encrypting unit for encrypting the electronic data decrypting key based on the medium key to generate the encrypted permission information. The user computer having a personal key generating unit for generating a medium key based on the medium number, a decrypting unit for decrypting the encrypted permission information based on the medium key to generate the electronic data decrypting key which is the same as the electronic data decrypting key of the vendor computer, and a decrypting unit for decrypting the encrypted electronic data based on the electronic data decrypting key to generate a plain text electronic data.

EP 0 773 490 A1 discloses a security system for protecting information stored in storage media which is operated by checking identifiers assigned to each medium, system and terminal. Medium IDs are identifiers written by manufacturers of the storage media. System IDs, or corporate IDs, are assigned to enterprise-wide computer systems each consisting of a host computer and terminals. Terminal IDs are affixed to the respective terminals. Data is stored in the media in encrypted form. The security system checks the validity of the medium ID, system ID, and terminal before allowing the user to perform any data access, thus protecting the content from unauthorized access. The security system also writes permission data into each storage medium to manage the decryption of encrypted data stored therein. The permission data contains an encrypted key which is necessary for decrypting the data, and the key can be decoded only with a valid medium and unit ID, thus protecting the data in the medium against any attempt to decrypt it with unqualified equipment.

Japanese Patent Laid-Open No. HEI 8-153331 (which sometimes will be referred to hereinafter as a "prior art reference 1") discloses a technique in which a CD-ROM having a data structure capable of copy protection and a decision means on a copied CD-ROM are provided to achieve the prevention of illegal copying.

However, in the technique written in this prior art reference 1, a specified portion of a medium is set at a specified value for the copy prevention. Moreover, in this technique, for example, since the address of the Q-channel in an arbitrary subcode block of a CD is set at a specified value. A problem is that this causes a lower reliability on the data protection.

In addition, Japanese Patent laid-Open No. HEI 7-85574 (which sometimes will be referred to hereinafter as a "prior art reference 2") discloses a technique of accomplishing the prevention of the copy of collected software or music information without increasing the cost of an optical disc for supplying the software or music information.

The technique written in this prior art reference 2 achieves the copy prevention by recording encryption key information in a non-data recording area through the use of bar code or the like.

However, there is a problem in that this requires a dedicated key information reading means because the non-data area exists in other than an area to be scanned by an optical head of a readout equipment and the key information is recorded through the use of a bar code or a geometrical pattern.

Still additionally, USPN:5,802,174 (corresponding to Japanese Patent Laid-Open No. HEI 9-017119; which sometimes will be referred to hereinafter as a "prior art reference 3") discloses a data recording medium and others which are media such as CD-ROM in which data is recorded with pits, and which are capable of preventing easy duplicate and, even if the duplication of a pits-formed section occurs, of inhibiting the easy readout of a recorded information signal.

The technique written in the prior art reference 3 is made to separately record encrypted data and encryption key information in two recording areas different in recording form or recording layer from each other, for example, to record the encryption key information by means of groove wobble, magneto-optical or phase change, or to record it in another recording layer.

However, because of relating to a copy prevention technique for a ROM medium such as CD-ROM, unlike the present invention, the technique written in this prior art reference 3 is not applicable to a recordable medium.

Moreover, only changing the recording layer in which the encryption key is written cannot prevent the easy readout or copy of the encryption key. In a case in which the encryption key information is written through the use of the groove wobble, since difficulty is encountered in giving a different identification number for each disc, it has no effect on the copy prevention on a recordable medium. Still moreover, if the encryption key information is written in the other recording form other than pits, such as magneto-optical, this requires a dedicated key information reading means for the readout.

Yet additionally, EP751516A (corresponding to Japanese Patent Laid-Open No. HEI 9-115241; which sometimes will be referred to hereinafter as a "prior art reference 4") discloses a data recording equipment which inhibits easy duplicate and, even if duplicated, rejects the readout.

However, the technique written in this prior art reference 4 is for recording a unique identification information on a medium, for example, is for recording identification information thereon in a data area or a TOC area. Also in this case, since the TOC area is arbitrarily rewritable by a user, there is a possibility of the falsification of the encryption key by a user.

The present invention has been developed in consideration of these problems, and it is an object of the invention to provide a recording medium, a recording medium initialize method, an encryption method on a recording medium, an encryption equipment, a decryption equipment, and an audio/visual/data equipment, capable of performing a predetermined initialization on a disc through the use of an existing formatting method so that a user can copy data involved in a copyright, such as music, movie or computer program data or others, once in one disc but the user cannot further copy it from the copy disc to another disc.

### Disclosure of Invention

For this purpose, a recording medium according to the present invention is characterized by comprising an administration area readable by a reading device but inaccessible to a user and a data area readable by the reading device and arbitrarily accessible to the user, with disc identification information for encryption being recorded in the administration area.

This encryption is made through the use of disc identification information, media identification number information recorded in a frame in a Q-channel subcode mode 2, serial number information recorded in a frame in a Q-channel subcode mode 3 or information on combinations thereof, that the encryption is made through the use of a random function based on disc identification information, media identification number information recorded in a frame in the subcode-Q mode 2, serial number information recorded in a frame in the subcode-Q mode 3 or information on combinations thereof, or that the encryption is made through the use of a hash function based on a key message variable in bit length, disc identification information, media identification number information recorded in a frame in the Q-channel subcode mode 2, serial number information recorded in a frame in the Q-channel subcode mode 3 or information on combinations thereof.

Accordingly, this inhibits the restoration of the original disc identification information or the like, thus providing an added concealment of the media information and achieving the protection of the copyrighted data.

Accordingly, when arranged in this way, only one specific disc is obtainable to a user, but even if the user attempts to copy the specific disc onto another disc, a media number (disc ID, MCN, serial number of ISRC) needed for decryption of the encrypted data stored in the specific disc shows a difference to reject the restoration of the original music or visual data. This inhibits the secondary (further) copy from the copy disc to the others, thus exhibiting advantages in protection of copyrighted data. Moreover, this has advantages of achieving the protection of the copyrighted data without previously adding the copyright fee to a recording/readout equipment. Still moreover, this has advantages of encrypting without changing the existing disc formatting method. And still, since an encryption key distributing manner is diversely variable as needed, the concealment of the encryption key is maintainable, thus providing an enhanced resistance of the encryption key.

In addition, the prevent invention offers the following effects and advantages mentioned in (1) to (4).
(1) The present invention differs from the technique written in the prior art reference 1, which records a specific value for copy prevention in a specified portion of a medium, in that disc identification information for encryption is recorded on a disc. Thus, the present invention is not for mere copy prevention, but is designed to encrypt data, thereby providing extremely high reliability on data protection.
(2) The present invention differs from the technique written in the prior art reference 2, in which encryption key information is recorded in a non-data recording area by means of bar codes or geometrical patterns, in that the disc identification information for the encryption is recorded in "an administration area readable by a reading device but inaccessible to a user. Accordingly, the present invention has an advantage of performing the encryption without using a dedicated key information reading means.
(3) The present invention differs from the technique written in the prior art reference 3, in which encrypted data and encryption key information are recorded in two recording areas different in recording form or recording layer from each other, in that different disc identification information for each recordable disc is recorded in "an administration area readable by a reading device but inaccessible to a user". Accordingly, the prevent invention provides advantages of individually setting an encryption key for discs to extremely enhance the reliability on the data protection and of encrypting without using a dedicated key information reading means.
(4) The present invention differs from the technique written in the prior art reference 4, which permits a user to arbitrarily rewrite/erase information in a TOC area, in that an area for recording disc identification information for encryption is concretely "an administration area readable by a reading device but inaccessible to a user". Accordingly, the present invention provides an advantage of extremely reducing the possibility of the falsification of the data encryption key by a user.

In addition, in a data area, media information including one of audio, visual and data information is recorded as encrypted media information obtained by the encryption based on an encryption key produced through the use of at least the aforesaid disc identification information, and it is also possible that a media identification number readable to a user is recorded in a state distributed, that this recording medium is of an optically recorded type, or that the data area permits a user to make writing at least once.

Thus, even if attempts are made for copy to the other discs, a media number (disc ID, MCN, serial number of ISRC) needed for decryption of encrypted data stored in the specific disc becomes different to reject the restoration of the original music or visual data, which inhibits the secondary copy from the copy disc to another disc, thereby providing an advantage in protection of copyrighted data.

The inhibition of the secondary copy from the copy disc to another disc leads to protection of copyrighted data.

Furthermore, in accordance with the present invention, there is provided a method of initializing a recording medium having an administration area readable by a reading device but inaccessible to a user and a data area readable by the reading device and arbitrarily accessible to the user, characterized in that disc identification information for encryption is recorded in the administration area.

Still furthermore, it is also appropriate that, for recording the disc identification information, the initialize method comprises a first writing step of recording the encryption disc identification information in the administration area, a second writing step of recording a media identification number information in the data area in the subcode-Q mode 2, and a third writing step of recording serial number information in the data area in the subcode-Q mode 3.

Similarly, this inhibits the secondary copy from the copy disc to another disc, thereby achieving the protection of the copyrighted data. Moreover, this has an advantage of encrypting without changing the existing disc formatting method. Still moreover, since an encryption key distributing manner is diversely variable as needed, it is possible to maintain the concealment of the encryption key and to provide an enhanced resistance of the encryption key.

And still, it is also appropriate that this encryption is made through the use of disc identification information, media identification number information recorded in a frame in the subcode-Q mode 2, serial number information recorded in a frame in the subcode-Q mode 3 or information on combinations thereof, that the encryption is made through the use of a random function based on disc identification information, media identification number information recorded in a frame in the subcode-Q mode 2, serial number information recorded in a frame in the subcode-Q mode 3 or information on combinations thereof, or that the encryption is made through the use of a hash function based on a key message variable in bit length, disc identification information, media identification number information recorded in a frame in the subcode-Q mode 2, serial number information recorded in a frame in the subcode-Q mode 3 or information on combinations thereof.

In addition, in accordance with the present invention, there is provided an encryption method on a recording medium having an administration area readable by a reading device
but inaccessible to a user and a data area readable by the reading device and arbitrarily accessible to the user, characterized by comprising an encryption step of, after initialization is made by recording disc identification information for encryption in the administration area, encrypting media information including one of audio, visual and data information by an encryption key using at least the disc identification information to record it as encrypted media information in the data area for producing a specific recording medium.

Accordingly, the data such as music or movie involved in copyright can be copied only once onto one disc, however, the secondary copy from the copy disc to another disc is inhibited, which leads to the protection of the copyrighted data. Moreover, this enables the protection of the copyrighted data without previously adding a copyright fee to a recording/readout equipment.

It is also appropriate that the initialization comprises a first writing step of recording disc identification information for the encryption in the administration area, a second writing step of recording media identification number information in the data area in the subcode-Q mode 2, and a third writing step of recording serial number information in the data area in the subcode-Q mode 3.

Moreover, it is also appropriate that the encryption step includes a first disc identification information reading step of reading out the disc identification information as first disc identification information, a first encryption key producing step of producing a first encryption key by combining the first disc identification information with at least one of the media identification number information and the serial number information, a first readout step of reading out the media information from an external apparatus, and a specific recording medium producing step of producing the specific recording medium by producing the encrypted media information through the use of the first encryption key to record the encrypted media information in the data area having the first disc identification information.

Thus, this inhibits the secondary copy from the copy disc to another disc, thereby achieving the protection of the copyrighted data.

Still moreover, it is also appropriate that that this encryption is made through the use of disc identification information, media identification number information, serial number information or information on combinations thereof, that the encryption is made through the use of a random function based on disc identification information, media identification number information, serial number information or information on combinations thereof, or that the encryption is made through the use of a hash function based on a key message variable in bit length, disc identification information, media identification number information, serial number information or information on combinations thereof.

Thus, this inhibits the restoration of the original disc identification information or the like, thereby enhancing the concealment of media information for the protection of the copyrighted data.

Furthermore, in accordance with the present invention, there is provided an encryption equipment characterized by comprising readout means capable of reading out at least disc identification information from a recording medium having an administration area readable by a reading device but inaccessible to a user and a data area readable by the reading device and arbitrarily accessible to the user, with the disc identification information for encryption being recorded in the administration area, encrypted media information generating means capable of encrypting media information including one of audio, visual and data information by means of an encryption key using at least the disc identification information for outputting the media information as encrypted media information to the data area, and encrypted media information preserving means capable of preserving the encrypted media information in the data area of the recording medium having the same disc identification information.

Similarly, this inhibits the secondary copy from the copy disc to another disc, thus protecting the copyrighted data.

Still furthermore, it is also appropriate that this encryption is made through the use of disc identification information, media identification number information recorded in a frame in the subcode-Q mode 2, serial number information recorded in a frame in the subcode-Q mode 3 or information on combinations thereof, that the encryption is made through the use of a random function based on disc identification information, media identification number information recorded in a frame in the subcode-Q mode 2, serial number information recorded in a frame in the subcode-Q mode 3 or information on combinations thereof, or that the encryption is made through the use of a hash function based on a key message variable in bit length, disc identification information, media identification number information recorded in a frame in the subcode-Q mode 2, serial number information recorded in a frame in the subcode-Q mode 3 or information on combinations thereof.

In addition, in accordance with the present invention, there is provided a decryption equipment characterized by comprising second readout means capable of reading out at least disc identification information from a recording medium having an administration area readable by a reading device but inaccessible to a user and a data area readable by the reading device and arbitrarily accessible to the user, with the disc identification information for encryption being recorded in the administration area and encrypted information being recorded in the data area, second encryption key producing means for producing a second encryption key from at least the disc identification information, and decryption means capable of decrypting the encrypted information through the use of the second encryption key for playing back media information including one of audio, visual and data information.

Accordingly, this enables the encryption without altering the existing disc formatting method. And still, since an encryption key distributing manner is diversely variable as needed, the concealment of the encryption key is maintainable, thus providing an added resistance of the encryption key.

Still additionally, it is also appropriate that this encryption is made through the use of disc identification information, media identification number information recorded in a frame in the subcode-Q mode 2, serial number information recorded in a frame in the subcode-Q mode 3 or information on combinations thereof, that the encryption is made through the use of a random function based on disc identification information, media identification number information recorded in a frame in the subcode-Q mode 2, serial number information recorded in a frame in the subcode-Q mode 3 or information on combinations thereof, or that the encryption is made through the use of a hash function based on a key message variable in bit length, disc identification information, media identification number information recorded in a frame in the subcode-Q mode 2, serial number information recorded in a frame in the subcode-Q mode 3 or information on combinations thereof.

Moreover, in accordance with the present invention, there is provided an audio/visual/data equipment characterized by comprising readout means capable of reading out at least disc identification information from a recording medium having an administration area readable by a reading device but inaccessible to a user and a data area readable by the reading device and arbitrarily accessible to the user, with the disc identification information for encryption being recorded in the administration area, encrypted media information generating means capable of encrypting media information including one of audio, visual and data information by means of an encryption key using at least the disc identification information for outputting it as encrypted media information, and encrypted media information preserving means capable of preserving the encrypted media information in the data area.

Still moreover, in accordance with the present invention, there is provided an audio/visual/data equipment characterized by comprising second readout means capable of reading out at least disc identification information from a recording medium having an administration area readable by a reading device but inaccessible to a user and a data area readable by the reading device and arbitrarily accessible to the user, with the disc identification information for encryption being recorded in the administration area and encrypted information being recorded in the data area, second encryption key producing means for producing a second encryption key from at least the disc identification information, and decryption means capable of decrypting the encrypted information through the use of the second encryption key for playing back media information including one of audio, visual and data information.

And still, it is also appropriate that this encryption is made through the use of disc identification information, media identification number information recorded in a frame in the subcode-Q mode 2, serial number information recorded in a frame in the subcode-Q mode 3 or information on combinations thereof, that the encryption is made through the use of a random function with a seed based on disc identification information, media identification number information recorded in a frame in the subcode-Q mode 2, serial number information recorded in a frame in the subcode-Q mode 3 or information on combinations thereof, or that the encryption is made through the use of a hash function based on a key message variable in bit length, disc identification information, media identification number information recorded in a frame in the subcode-Q mode 2, serial number information recorded in a frame in the subcode-Q mode 3 or information on combinations thereof.

Accordingly, this inhibits the secondary copy from the copy disc to another disc to protect the copyrighted data, and enables the encryption without altering the existing disc formatting method. And still, since an encryption key distributing manner is diversely variable as needed, the concealment of the encryption key is maintainable, thus providing an enhanced resistance of the encryption key.

### Brief Description of Drawings

FIG. 1 is an illustration of an arrangement of a non-data area and a data area in a CD-R/RW to which the present invention is applicable.
FIG. 2(a) is an illustration of a conceptual area arrangement of a CD-R/RW initialized.
FIG. 2(b) is an illustration of a conceptual area arrangement of a CD-R/RW on which encrypted data is recorded.
FIG. 3 is an illustration for explaining encryption based on media numbers.
FIG. 4 is an illustration for explaining decryption based on media numbers.
FIG. 5 is an illustration for explaining the inhibition of secondary copy.
FIG. 6 is an illustration for explaining an encryption method using an encryption key.
FIG. 7 is an illustrative view showing an encryption key imprinting equipment according to a first embodiment of the present invention.
FIG. 8 is an initialization flow chart of a copy prevention method for a CD-RW according to the first embodiment of the present invention.
FIG. 9 is an initialization flow chart of a copy prevention method for a CD-R according to the first embodiment of the present invention.
FIG. 10 is an initialization flow chart of a copy prevention method for a CD-R according to the first embodiment of the present invention.
FIG. 11 is an initialization flow chart of a copy prevention method for a CD-R according to the first embodiment of the present invention.
FIG. 12 is an illustration of a data layout in a CD-R/RW after initialized, according to the first embodiment of the present invention.
FIG. 13 is an illustrative view showing an encryption/decryption key recording equipment according to a first modification of the first embodiment of the present invention.
FIG. 14 is a flow chart of a copy prevention method for a CD-R or CD-RW according to the first modification of the first embodiment of the present invention.
FIG. 15 is an illustrative view showing an encryption/decryption recording equipment according to a second modification of the first embodiment of the present invention.
FIG. 16 is a flow chart of a copy prevention method for a CD-R or CD-RW according to the second modification of the first embodiment of the present invention.
FIG. 17 is an illustrative view showing an encryption/decryption recording equipment according to a third modification of the first embodiment of the present invention.
FIG. 18 is a flow chart of a copy prevention method for a CD-R or CD-RW according to a modification of the first embodiment of the present invention.
FIG. 19 is an illustrative view showing an audio equipment according to a second embodiment of the present invention.
FIG. 20 is an illustrative view showing another audio equipment according to the second embodiment of the present invention.
FIG. 21 is an illustrative view showing an audio/visual/data equipment according to a first modification of the second embodiment of the present invention.
FIG. 22 is an illustrative view showing an audio/visual/data equipment according to a second modification of the second embodiment of the present invention.
FIG. 23 is an illustrative view showing an encryption/decryption equipment according to a third embodiment of the present invention.
FIG. 24 is an illustration of an arrangement of a non-data area and a data area in a CD-R/RW.
FIG. 25 is an illustration of a data structure of a disc in the middle of writing.
FIG. 26 is an illustration of a data structure of a disc after completion of writing.
FIG. 27 is an illustration of a format of a sub-coding frame.
FIG. 28 is an illustration of a detailed format of a frame.
FIG. 29 is a detailed illustration of a sub-coding area.
FIG. 30 is an illustration of a frame structure in a mode 1 of a Q-channel.
FIG. 31 is an illustration of a frame structure in a mode 2 of the Q-channel.
FIG. 32 is an illustration of a data format when a drive equipment records an MCN.
FIG. 33 is an illustration of a format for MCN data read by a drive equipment.
FIG. 34 is an illustration of a frame structure in a mode 3 of the Q-channel.
FIG. 35 is an illustration of a format for ISRC data read by a drive equipment.
FIG. 36 is an illustration of a first example of data recording.
FIG. 37 is an illustration of a second example of data recording.
FIG. 38 is an illustration of a third example of data recording.
FIGs. 39(a) to 39(c) are illustrations for explaining an encryption key producing method using three types of encryption keys.
FIG. 40 is an illustration of an example of a program using a hash function.

### Best Mode for Carrying Out the Invention

Embodiments of the present invention will be described hereinbelow with reference to the drawings in a case of a CD-R/RW as an example.

### (A) Description of First Embodiment of the Invention

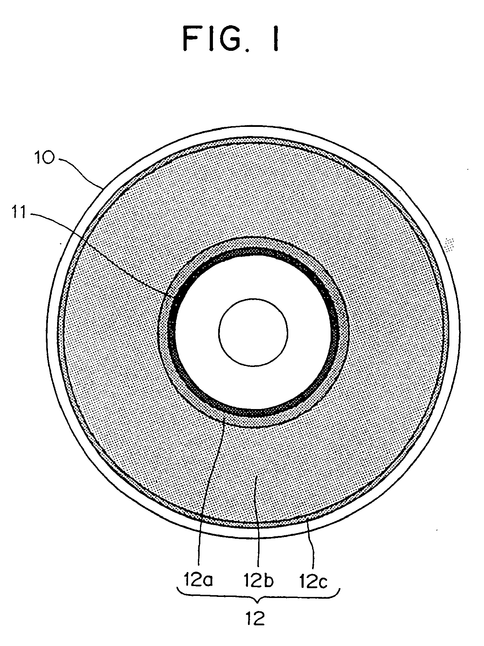

FIG. 1 is an illustration of an arrangement of a non-data area and a data area in a CD-R/RW to which the present invention is applicable. In FIG. 1, a disc 10 is a recording medium of a type optically readable or writable, and has an administration area 11 and a user area 12. This disc 10 is in a state before initialized.

In this case, the initialization signifies that a disc ID, MCN, ISRC and others are imprinted (recorded) on a physical disc (which sometimes will be referred to as "media"). As modes of using the disc initialized, there are a mode for industrial use and a mode for consumer use. The "industrial use" signifies, for example, that a primary maker initializes this physical disc and puts it on the market while a secondary maker purchases the initialized physical disc and records audio, visual, data or the like before putting it on the market. The "consumer use" signifies, for example, that a consumer purchases an initialized disc and records audio, visual, data or the like at individual level. Accordingly, the term "user" means the secondary makers, the consumer or the like. Concretely, the disc 10 is a CD-R of a write-once type or a CD-RW of a many-times data-writable type.

The administration area 11 is an area which is readable by a drive equipment but inaccessible to a user, and has a PCA and a PMA. The drive equipment mentioned here is a readout apparatus for a CD-R/RW or a reading device mounted in a recording equipment. That is, a drive equipment built in a public readout apparatus or the like to be used by a user is capable of the readout from this administration area 11, but the user cannot arbitrarily rewrite or erase the values in the administration area 11. More concretely, it is an area where there doesn't exist a command to be used for when the user makes the arbitrary rewrite or erase. The PCA is an area where there exists information for adjusting the laser power at the writing of data.

The PMA is an area where there exists a disc ID (disc identification information) for encryption, with this disc ID enabling the identification of each disc. Moreover, this disc ID is written by a drive equipment in a manner that a number is set at almost random where initializing, and only a special equipment can set the disc ID at a specified number. Thus, since a user who uses it in home or business does not have such a special equipment, he/she cannot rewrite the disc ID to a specified number.

In a usual way, the administration area 11 is located at only one place of the innermost circumference and has as a very small capacity as below 1% of the data recording capacity.

In addition, the user area 12 is an area readable by a drive equipment and arbitrarily accessible to the user. This user area 12 comprises a lead-in area 12a for storage of the lead-in, a data area (program area) 12b for storage of data such as music and a lead-out area 12c for storage of the lead-out.

In the data area 12b, there are written multimedia data such as audio, visual and data, and there are recorded encrypted data (encrypted media information) obtained by the encryption using an encryption key produced through the use of a disc ID, an MCN; media catalogue number (media identification number information) or a serial number (serial number information) of the ISRC, and in a state distributed or separated, recorded the MCN and the serial number of the ISRC. That is, when audio data is written by a user, data such as pauses, track numbers, indexes, times and characters, together with the audio data, are written in a sub-coding area of the data area 12b. The data area 12b of a CD-R is of a type permitting a user to make the write-once, while the data area 12b of a CD-RW is of a type permitting the user to make the writing repeatedly.

In this case, the MCN is an identifier of a media number, and is an information recorded with a Q-channel (in a mode 2) of the sub-coding area. The ISRC serial number is an information recorded with a Q-channel (in a mode 3) of the sub-coding area.

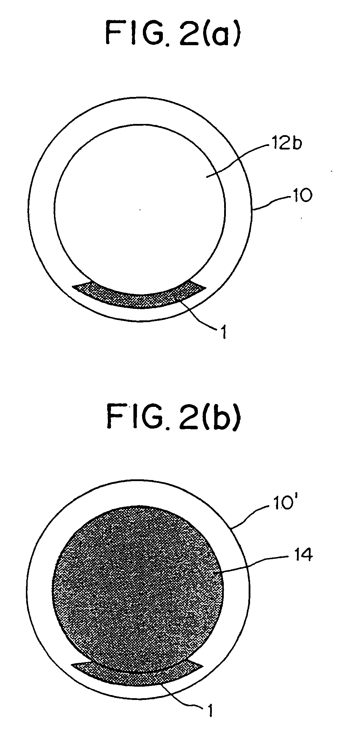

FIG. 2(a) is an illustration of a conceptual area arrangement of a CD-R/RW initialized. In FIG. 2(a), a disc 10 has a data area 12b and a media number area 1. Incidentally, a hole existing at the central part of the disc 10 is omitted from the illustration.

The media number area 1 is a conceptual area comprising a collection of three areas of the aforesaid disc ID, MCN and ISRC, and in fact, the area of the disc 10 is not used in such a configuration. Moreover, as the lengths thereof, the disc ID is represented with the decimal six digits, the MCN is with decimal thirteen digits and the ISRC serial number is with decimal five digits, with a proper combination thereof being employed as an encryption key. The combination will be mentioned later.

In addition, the multimedia data is encrypted with a media number forming a combination of the disc ID, MCN and ISRC serial number imprinted. Alternatively, it is also acceptable to use the entire ISRC in place of the ISRC serial number.

FIG. 2(b) is an illustration of a conceptual area arrangement in a CD-R/RW on which encrypted data is recorded. In FIG. 2(b), on a disc 10' are recorded a media number area 1 and encrypted data 14. That is, the multimedia data is encrypted by means of a media number being employed as an encryption key, thus providing the encrypted data 14 illustrated in FIG. 2(b).

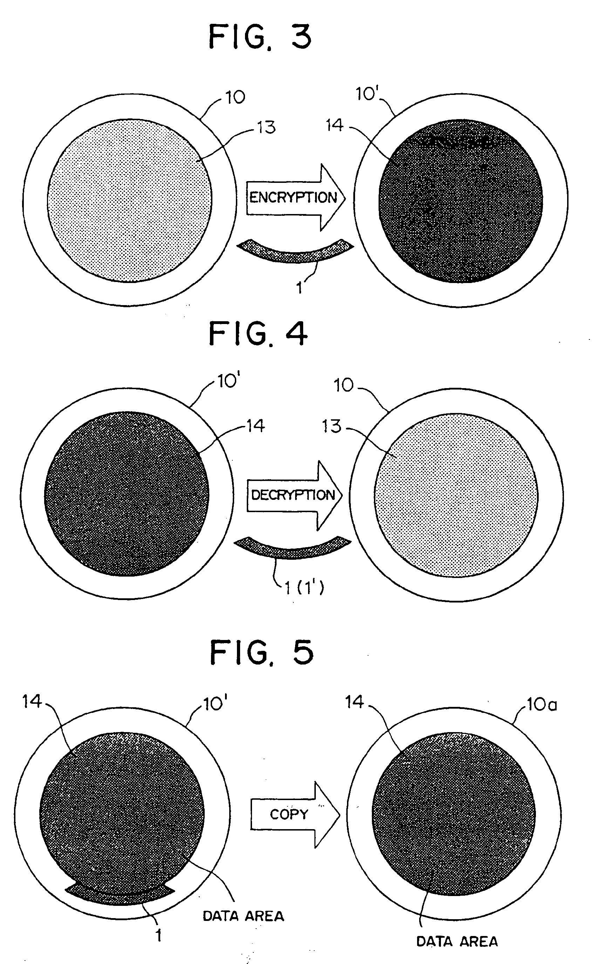

FIG. 3 is an illustration for explaining the encryption by the media number. In FIG. 3, data 13 (a circle illustrated on the left side of FIG. 3) is data before the encryption, concretely, multimedia data including information such as audio, visual or data. Moreover, this data 13 is encrypted through the use of an encryption key based on a media number (media number area) 1 comprising a disc ID, MCN and ISRC serial number, thereby providing encrypted data 14 (circle illustrated on the right side of FIG. 3) as shown in FIG. 3. Still moreover, this encrypted data 14 is recorded on a disc so that this disc is produced as a specific disc 10' (encryption step). That is, the media number (media number area) 1 is unique to each disc to be different from others, thus functioning as an encryption key.

Accordingly, a method for encryption on a recording medium according to the present invention is for encryption on a disc 10 having an administration area 11 readable by a drive equipment (not shown) but inaccessible to a user and a data area 12b readable by the drive equipment and arbitrarily accessible to the user, and comprises an encryption step of, after initialization in which a disc ID for encryption is recorded in the administration area 11, encrypting media information including one of audio, visual and data information through the use of an encryption key based on the disc ID to record it as encrypted media information in the data area 12b, thereby producing a specific disc 10'.

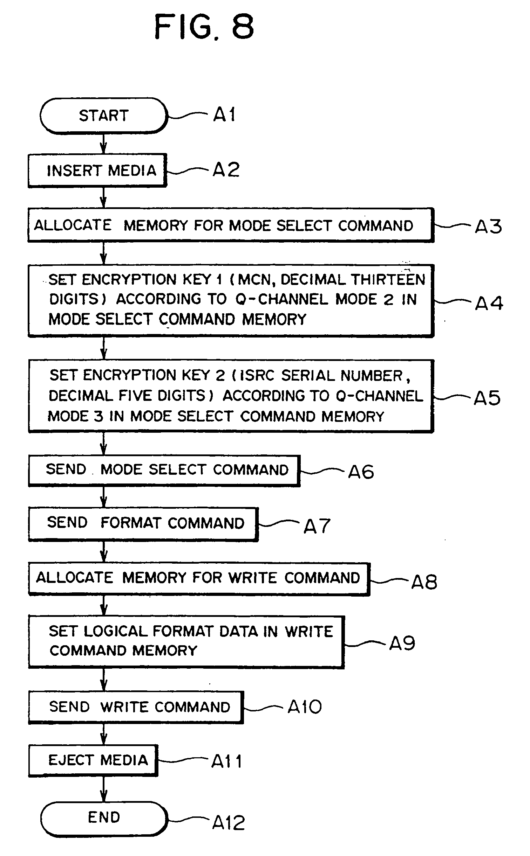

In this case, as will be described later with reference to FIG. 8, the aforesaid initialization comprises a first writing step of recording a disc ID for encryption in the administration area 11, a second writing step of recording a disc ID and an MCN (media identification number information) in the data area 12b in the subcode-Q mode 2, and a third writing step of recording an ISRC serial number (serial number information) in the data area 12b in the subcode-Q mode 3.

Concretely, in this encryption step, the disc ID is initially read out as first disc identification information (first disc identification information readout step). A media number 1 is then produced by a combination of the disc ID and the MCN, a combination of the disc ID and the ISRC serial number or a combination of the disc ID, MCN and ISRC serial number (first encryption key producing step). Following this, data 13 is read out from an external apparatus (first readout step) while encrypted data 14 is generated through the use of the media number 1 and is recorded in the data area 12b of the disc 10 having the same disc ID, thereby producing the specific disc 10' (specific recording medium producing step).

FIG. 4 is an illustration for explaining the decryption by a media number. In FIG. 4, the encrypted data 14 is decrypted (restored) through the use of a media number (media number area) 1', thereby obtaining the original data 13.

That is, in the decryption step, the disc ID of the specific disc 10' is first read out as second disc identification information. Subsequently, the encrypted data 14 is read out from this specific disc 10' so that a media number (media number area) 1' is produced by the combination of the disc ID and the MCN, the combination of the disc ID and the ISRC serial number and the combination of the disc ID, the MCN and the ISRC serial number. In other words, the media number (media number area) 1' functions as a second encryption key. The encrypted data 14 can be decrypted to be played back only when the media number 1' agrees with the media number 1.

FIG. 5 is an illustration for explaining the inhibition of the secondary copy. In FIG. 5, there are illustrated two types of discs 10' and 10a different from each other. The disc 10' is a disc obtained, for example, by the primary copy from a music CD, while the disc 10a is another initialized disc obtained by the secondary copy stemming from the primary copy disc 10'.

In this case, even if the secondarily copied data is read out by a CD-R/RW drive (which will be mentioned later), since the media number 1 forming the encryption key differs from the media number 1', the encrypted data of the copy disc 10a can be saved from decryption.

Thus, the encryption key based on the media number is unique, which prevents the secondary copy. Moreover, the data constituting the encryption key are recorded in the administration area 11 and the data area 12b of a CD-R disc or a CD-RW disc in a state distributed, and the data recorded distributed are again collected to produce the encryption key. Accordingly, this method enables the encryption without altering the existing disc formatting manner. And still, the distributing manner is diversely variable as needed, thus providing an enhanced resistance of the encryption key.

Secondly, a concrete description will be given hereinbelow of a media number serving as an encryption key. As will known, the encryption methods include a symmetric method in which the encryption key and the decryption key are the same and a non-symmetric method in which the encryption key and the decryption key are different from each other. As the examples using the former, there have been known the DES (Data Encryption Standard), RC4 (Rivest Code #4) and IDEA, while as the examples using the latter, there have been known the RSA (Rivest, Shamit, Adleman).

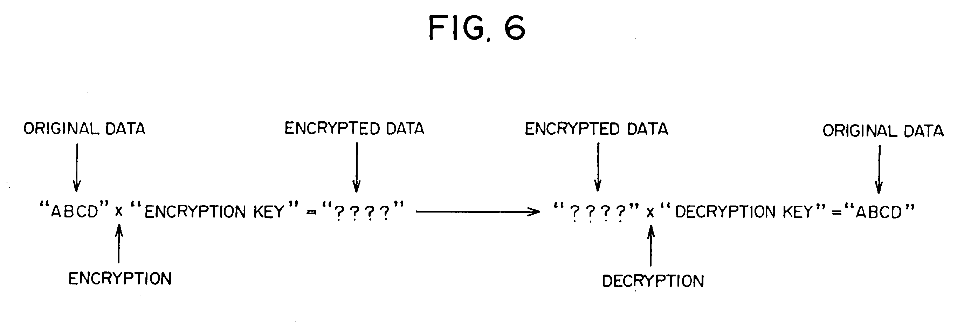

FIG. 6 is an illustration of an encryption method using an encryption key. As FIG. 6 shows, the original data "ABCD" is multiplied by an "encryption key", thereby making encrypted data "????". Moreover, the encrypted data "????" is multiplied by a "decryption key", thereby making the original data "ABCD".

The length of the encryption key used usually is set such that the DES, RC4, IDEA and RSA have 56 bits, 46 to 128 bits, 128 bits and 512 to 4096 bits, respectively. Incidentally, the DES of 56 bits and the RSA of 1024 bits are similar in degree of decryption difficulty.

Meanwhile, for the encryption using the foregoing media number, the media number is required to have the number of bits needed for the encryption.

On the other hand, the MCN has thirteen digits in decimal number (43.2 bits in binary number), the ISRC has five digits in decimal number (16.6 bits in binary number), and the disc ID has six digits in decimal number (19.9 bits in binary number). These simplexes cannot produce a cryptogram of a sufficient length. For this reason, these three types of encryption keys 1 to 3 are combined according to an encryption method to be taken. The using examples of the encryption keys 1 to 3 are mentioned in the following (i) to (vi). In the following description, the MCN is referred to as the "encryption key 1", the ISRC serial number as the "encryption key 2", and the disc ID as the "encryption key 3".
(i) In a case in which decimal six digits provide an encryption key with a sufficient length,
   the encryption key 3 (decimal six digits) is used.
(ii) In a case in which decimal eleven digits provide an encryption key with a sufficient length,
   the encryption key 2 (decimal five digits) and the encryption key 3 (decimal six digits) is used.
(iii) In a case in which decimal nineteen digits provide an encryption key with a sufficient length,
   the encryption key 1 (decimal thirteen digits) and the encryption key 3 (decimal six digits) are used.
(iv) In a case in which decimal twenty-four digits provide an encryption key with a sufficient length,
   the encryption key 1 (decimal thirteen digits), the encryption key 2 (decimal five digits), and the encryption key 3 (decimal six digits) are used.
(v) In a case in which the length of an encryption key is longer than that in (iv),
   In addition to the encryption key 1, the encryption key 2 and the encryption key 3, produce an encryption key corresponding to the shortage in a data section and use it. For example, if thirty digits are necessary, it is also possible to acquire other six digits from some proper format section, or to write the six digits in the data section.
(vi) In a case in which the length of an encryption key is longer than that in (iv) and in the case of a CD-R disc,
   produce a plurality of encryption keys and a plurality of encryption keys 2 by forming a plurality of tracks, and use collectively the pluralities of encryption keys 1 and 2 coupled with the encryption key 3.

In addition, for the data encryption, the encryption key is required to take on an added concealment. For this requirement, each of three types of MCN (encryption 1), ISRC serial number (encryption key 2) and disc ID (encryption key 3) is substituted into a specific function and calculated, with the calculation result being used as an encryption key. For employment as this specific function, it is necessary to satisfy the following conditions (1) and (2):
(1) The same result is obtained from the same MCN, ISRC serial number and disc ID; and
(2) Resistance to Reverse engineering.

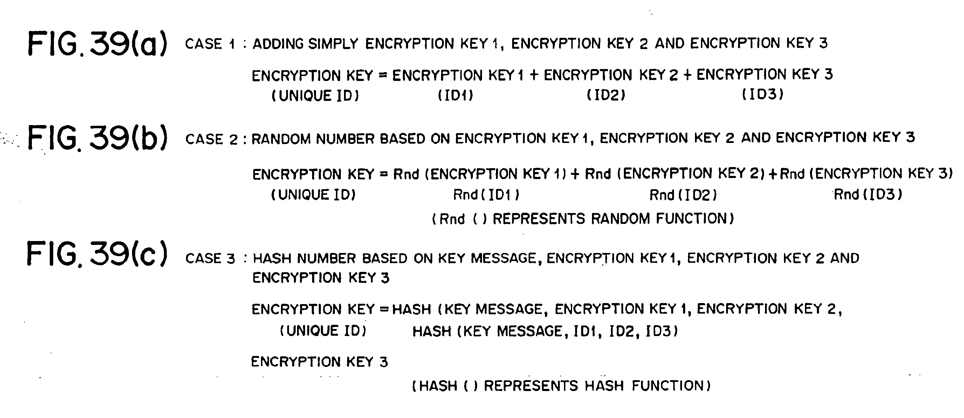

The reason for the employment of the condition (1) is that, if a function generating a true random number is put to use, a different result appears each time to make it difficult to regenerate a constant encryption key. The employment of the condition (2) is for preventing the original MCN, ISRC serial number and disc ID from being decoded from the calculation result through the use of an inverse function. These three types of encryption keys will be referred as "IDs" for convenience only, and with reference to FIGs. 39(a) to 39(c), a description will be given hereinbelow of an algorithm for producing an encryption key.

FIG. 39(a) is an illustration for explaining an encryption key producing method in which three types of encryption keys 1 to 3 are added in a simple way, FIG. 39 (b) is an illustration for explaining an encryption key producing method using a random function based on the three types of encryption keys 1 to 3, and FIG. 39(c) is an illustration for explaining an encryption key producing method using a hash function based on the three types of encryption keys 1 to 3. In these illustrations, an encryption key will equally be referred to as a "unique ID", while the encryption key 1 (MCN), the encryption key 2 (ISRC serial number) and the encryption key 3 (disc ID) will be referred to as "ID1", "ID2" and "ID3", respectively.

In FIG. 39(a), Case 1 is equivalent to the above-mentioned (iv) to (vi), and an encryption key (unique ID) is made by adding the three types of encryption key 1 (ID1), encryption key 2 (ID2) and encryption key 3 (ID3). Moreover, when the length of the encryption key needed is short, this corresponds to the above-mentioned (i) to (iii) and permits the individual use of the MCN, ISRC serial number and the disc ID. Thus, this encryption is made through the use of the disc ID, MCN or ISRC serial number, or a combination thereof. The combinations thereof are six in number for the three types of MCN, ISRC serial number and disc ID.

In FIG. 39(b), in Case 2, an encryption key (unique ID) is obtained by adding the result of a random function Rnd (ID1) generated on the basis of the MCN (ID1), the result of a random function Rnd (ID2) based on the ISRC serial number (ID2) and the result of a random function Rnd (ID3) based on the disc ID (ID3).

In this case, the random function Rnd () represents for generating a pseudo-random number on the basis of a seed inputted, and this random function multiplies the number, inputted as the seed, by a very large integer, adds a very large integer to the multiplication result and outputs a value at a predetermined digit of the addition result. The "seed" signifies an initial value for a random generation calculation in the random function Rnd ().

Accordingly, the encryption is made through the use of a random function based on a disc ID, MCN or ISRC serial number, and is done with a random function based on information about a combination of the disc ID, MCN and ISRC serial number.

In practice, the random function Rnd () previously has a fixed random number table so that the same result is outputted when an encryption key is produced using the same MCNs, the same ISRC serial numbers and the same disc IDs, and outputs a specified numeral with respect to the same MCNs, the same ISRC serial numbers and the same disc IDs. Incidentally, all the three types of MCN, ISRC serial number and disc ID are added to each other so that the addition result is substituted as the seed into the random function Rnd ().

As described above, since the random function Rnd () is used in the algorithm, the output of the same encryption key becomes feasible, and the reverse engineering of the produced encryption key becomes difficult.

Furthermore, in Case 3 of FIG. 39(c), an encryption key (unique ID) is produced according to a method in which the sum of a variable-length key message, the MCN (ID1), the ISRC serial number (ID2) and the disc ID (ID3) is obtained through calculation using a hash function.

In this case, the hash function is a function in which an input is a predetermined length of sentence (sentence data) and an output is a fixed length of message digest (message digest data). The message digest is equally referred to as a "hash value".

In the following explanation, this predetermined length of sentence signifies, for example, a 128-bit disc ID or the like, and concretely, is equivalent to one obtained by dividing a combination of disc IDs and others at an appropriate length. The bit length inputted is not limited to 128 bits, but an 80-bits length or 200-bits length is also acceptable. That is, a short length reduces the load on the encryption processing and decryption processing but leading to less security, while a long length increases the load on the encryption processing and decryption processing but securing high security. In other words, a change of the bit length depends on design purpose.

In addition, the sum of the MCN, ISRC serial number and disc ID does not reach 128 bits, a bit string (key message) is added to the sum of the MCN, ISRC serial number and disc ID for the 128 bits, before the calculation using the hash function.

Moreover, for the key message, it is also possible that a software (driver software) inserts a fixed message automatically or that a user inserts it. Still moreover, it is also appropriate that a key message is added according to the type of information to be recorded. And still the key message is made so as not be recorded on the same disc as the disc ID recorded disc. This is for enhancing the security of the encryption key.

Accordingly, the encryption is made through the use of a hash function based on a bit length variable key message, disc ID, MCN or ISRC serial number, or it is made through a hash function based on information on a combination of the key message, disc ID, MCN and ISRC serial number,

Secondly, through concrete program examples, a description will be given of the types of the hash function in Case 3. As mentioned above, the hash algorithm is made according to the MD method or others, and various proposals have been made so far.

For example, there have been known MD2 (Message Digest #2), MD4 (Message Digest #4) and MD5 (Message Digest #5) developed by Ronald L. Rivest, RSA Co., Ltd., RIPEMD (Race Integrity Primitive Evaluation Message Digest) developed by H. Dobbertin, and SHA (Secure Hash Algorithm) determined in PUB180 of FIPS (Federal Information Processing Standards) by U.S. NIST (National Institute of Standards and Technology) .

The MD2 is an algorithm for producing a 128-bit message digest, and is used for PEM. The MD4 is an algorithm developed in order to solving a low processing speed problem, and is prescribed in RFC1320 (Request for Comments 1320). In addition, this MD4 produces a 128-bit message digest, and has a high processing speed to produce the message digest more effectively than the MD5. Adversely, the possibility is that message digest values produced from different bases output the same value, that is, the value collision occurs.

In addition, the MD5 is an algorithm for producing a 128-bit message digest, and is prescribed in RFC1321. This MD5 can effectively produce a fixed-length of message digest on the basis of an arbitrary length of sentence, and sometimes is used for electronic signature. That is, the MD5 also acts as a fingerprint put on the original sentence. Still additionally, the difference of the disc ID, MCN and ISRC serial number extremely lowers the probability of production of the same encryption key.

The employment of these MD methods can cause each variation of the magnitude of the message digest, and enables fast software processing with a 32-bit to 64-bit CPU.

On the other hand, in addition to these MD methods, the hash algorithm has algorithms such as RIPEMD and SHA. The RIPEMD is an algorithm for producing a 160-bit message digest. Moreover, of the SHA, SHA-1 is an algorithm from the improvement of the MD4, and can produce a 160-bit length message digest longer than the MD4 or MD5, with it being prescribed in FIPS180-1.

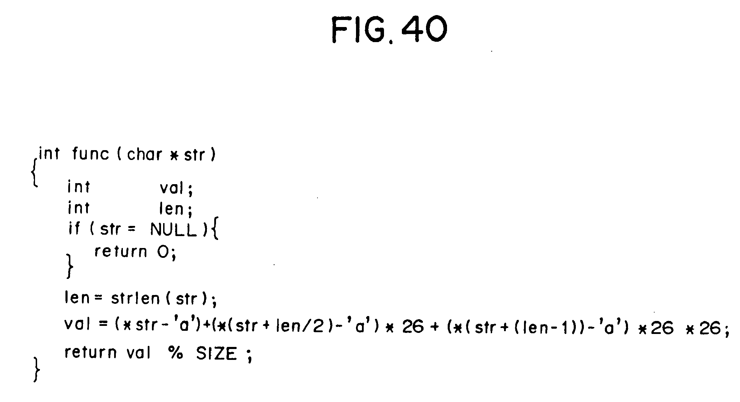

FIG. 40 is an illustration of an example of a hash function program. In FIG. 40, a function func () has an algorithm with the highest-level hash function (best hash function), where an input variable is (* str) of a pointer and an output is a message digest (val % SIZE).

In addition, another function (not shown) such as a main function hands over the pointer (* str) representative of the head position of a bit strings with a predetermined length to the function func () to call up the function func (). In len = strlen (str), the length of a predetermined number of bit strings inputted is obtained for the calculation of a hash value val. This value val is a value with three digits expressed in the base twenty-six system and corresponding to the apparatuses, tens and hundreds places in the decimal number, respectively. In this case, *str-'a' represents the head of an inputted character string, * (str + len/2)-'a' represents a central portion of the inputted character string, and * (str + (len-1))-'a' represents the end of the inputted character string. This val outputted is divided by the SIZE (for example, 1023) into 1023 types of residues. In this way, all the alphabet strings inputted are replaced with 1023 types of message digests. In a case in which the pointer variable shows 0 (NULL), "0" is outputted with no hash algorithm calculation.

**[Table 1]**

| Example of Executed Conditions of Calculation using Hash Function | |
|---|---|
| Size : 1023 | |
| Number of Times of Repetition : 10 | |
| Total Number of Data (Piece) | 50000 |
| Insertion Time (Second) | 1.5850 |
| Retrieval Time (Second) | 2.6950 |
| Delete Time (Second) | 1.6550 |
| Average of Element numbers | 35.266 |
| Maximum of Element Numbers | 54.400 |
| Minimum of Element Numbers | 23.000 |

**[Table 2]**

| Example of Distribution of Data Produced by Hash Function | | |
|---|---|---|
| Range of Hash Value | Number of Data Produced (one * corresponds to 50 elements) | |
| table [0 to 49] : | ************************************* | 1922 |
| table [50 to 99] : | ************************************* | 1930 |
| table [100 to 149]: | ************************************* | 1904 |
| table [150 to 199]: | ************************************** | 1968 |
| table [200 to 249]: | ********************************** | 1765 |
| table [250 to 299]: | ************************************ | 1834 |
| table [300 to 349]: | ************************************ | 1836 |
| table [350 to 399]: | *********************************** | 1781 |
| table [400 to 449]: | ********************************** | 1749 |
| Table [450 to 499]: | ************************************* | 1876 |
| table [500 to 549] : | ********************************** | 1707 |
| table [550 to 599] : | ********************************** | 1747 |
| table [600 to 649] : | *********************************** | 1756 |
| table [650 to 699] : | ********************************** | 1738 |
| table [700 to 749] : | ************************************ | 1806 |
| table [750 to 799] : | *********************************** | 1768 |
| table [800 to 849] : | *********************************** | 1753 |
| table [850 to 899] : | ************************************ | 1840 |
| table [900 to 949] : | *********************************** | 1778 |
| table [950 to 999] : | ************************************ | 1806 |
| table [1000 to 1022] : | ******************** | 850 |

| | | |
|---|---|---|
| Histogram Average : 1813.978495 Average : 36.279570 Maximum Value : 57 Minimum Value : 21 | | |

The Table 1 shows a executed condition for the calculation using the hash function, and as this table 1 shows, the total number of data to be inputted is 50000 and the repetition is made ten times. Furthermore, the table 2 shows an example of the distribution of data produced through the hash function, where "table" represents a range of the message digest value (hash value) and * designates a histogram (number of data produced) in that range. In this case, the elements included in one * are 50 in number. For example, a histogram in which a quantity is expressed with * is drawn on the right side of the "table [0 to 49] in the table 2, and the numeral 1922 on the right side thereof denotes message digest values, and signifies the production of 1922 message digest values each being within a range from 0 to 49. Accordingly, it is found from this histogram that the message digests are produced at almost same frequency.

The encryption key producing methods using the random function Rnd () and the hash function Hash () shown in FIGs. 39 and 40 and the tables 1 and 2 also apply to a second embodiment, a third embodiment and modifications thereof, which will be described later. Moreover, in the above-mentioned program examples, if two-byte processing is conducted, the Japanese can also be used as the input sentence.

As described above, the employment of the hash function Hash () enables the output of the same results and allows the production of an encryption key strong to the reverse engineering.

That is, the employment of the random function Rnd () or the hash function Hash () mentioned in detail above enables the production of the same encryption key from the same disc ID. Moreover, since these functions do not have an inverse function, difficulty is encountered in restoring the original disc ID or the like from the produced encryption key, which enhances the concealment thereof.

In addition, with respect to the concealment, in a case in which the decoding is made using a personal computer at the ordinary user level, the number of bus lines of a CPU, the number of bits of a memory, or the like, mounted in that personal computer, have virtually the inability to decode the 128-bit message digest. Thus, in practice, a user cannot make the secondary copy of the copyrighted data, such as music, movie and computer program, which achieves the protection of the copyrighted data.

As described above, the PMA readable by even a user's drive equipment and the MCN and ISRC recorded in the data area 12b in a state distributed assure the number of bits necessary for the encryption.

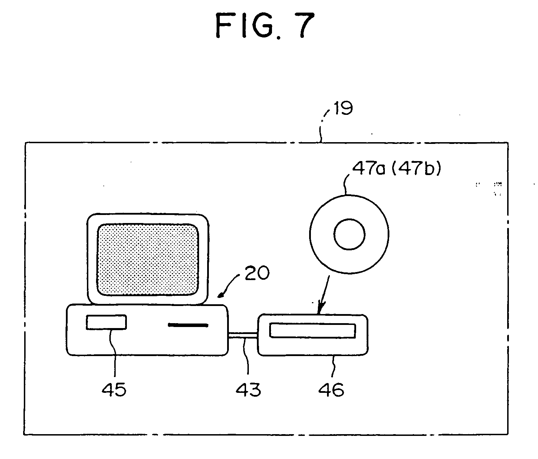

FIG. 7 is an illustrative view showing an encryption key imprinting equipment according to a first embodiment of the present invention. In FIG. 7, an encryption key imprinting equipment 19 is for encrypting multimedia data such as audio, visual and data to record it as encrypted data, and is composed of a personal computer 20, a cable 43, a CD-R/RW drive 46. In addition, a CD-R disc (CD-R media) 47a or a CD-RW disc (CD-RW media) 47b is a disc (media) before initialized.

The personal computer 20 is for initializing the CD-R disc 47a or the CD-RW disc 47b, and is equipped with a media number setting means 45. This media number setting means 45 is for setting values of the MCN and the ISRC serial number, and is provided with a Mode Select command memory (not shown) to temporarily safe-keeping the values inputted by an operator. Moreover, the personal computer 20 is made to set up a UDF (Universal Disc Format) forming a logical format at the initialization of the disc.

This personal computer 20 is designed to be capable of, when a user makes a copy, executing a logical format corresponding to a software (for example, DirectCD; product name, produced by Adaptec Co., Ltd.) the user takes. The DirectCD is a write software capable of, when a user makes a copy, handling a file mounted in the CD-R/RW drive 46, under an environment like an environment for dealing with a file placed in a built-in disc or a floppy disc.

Furthermore, at the initialization of the disc, the user makes a logical format through the use of the DirectCD. Still furthermore, when the user wants to establish the compatibility with the ISO9660, it is possible to additionally use the ISO9660 logical format. In this case, there is a need to format both the two types of ISO9660 and DirectCD.

This ISO9660 (International Organization for Standardization 9660) is an international standard, which defines the file, directory structure, logical format and others in a CD-ROM or a CD-R/RW. Moreover, the ISO9660 has an extensible specification, where various specifications are prescribed for the extension. Still moreover, the ISO9660 has information interchange levels, defining level 1 to level 3. In general, the ISO9660 signifies the level 1, where there are the characters available and the standard for the use of file names.

Although the computer 20 has other well-known features, the detailed description thereof will be omitted.

The cable 43 is for setting up the electrical connection between the personal computer 20 and the CD-R/RW drive 46.

The CD-R/RW drive 46 is for recording the aforesaid disc ID, MCN and ISRC serial number on a disc inserted thereinto.

Thus, in the encryption key imprinting equipment 19, the MCN and the ISRC serial number are set by the media number setting means 45 of the personal computer 20, and the set values are inputted through the cable 43 to the CD-R/RW drive 46. In the CD-R/RW drive 46, the MCN and the ISRC serial number are recorded and a disc ID is automatically recorded.

This configuration performs the initialization for the prevention of the copy of the CD-R/RW. Referring to FIGs. 8 to 11, a description will be given of an initialize flow for a CD-RW and a CD-R.

FIG. 8 is an initialization flow chart for a method for the prevention from the copy of a CD-RW according to the first embodiment of the present invention.

A recording medium initialize method according to the prevent invention is a method of initializing a recording medium (disc 10) having an administration area 11, readable by a drive equipment (not shown) but inaccessible to a user and a data area 12b readable by the drive equipment and accessible to the user, and of recording a disc ID for encryption.

Initialize steps start at a step A1. First, in a step A2, a CD-RW disc (CD-RW media) 47b is inserted into the CD-R/RW drive 46. In a step A3, a reservation is made for a Mode Select command memory (not shown), and in a step A4, an encryption key 1 is set in the Select command memory, then followed by a step A5, where an encryption key 2 is set in the Select command memory. Subsequently, in a step A6, a Mode Select command is sent, thereby preparing these encryption key 1 and encryption key 2.

In a step A7, the encryption key 1 and the encryption key 2 are actually written in the data area 12b, and an encryption key 3 is written in the administration area 11. That is, in the data area 12b, the MCN is recorded in the subcode-Q mode 2 (second writing step) while the ISRC serial number is recorded in the subcode-Q mode 3 (third writing step).

The encryption key 3 is sent automatically by the CD-R/RW drive 46, and the disc ID for the encryption is recorded in the aforesaid administration area 11 (first writing step). The encryption key imprinting terminates at this step A7.

Thus, for recording the aforesaid disc ID, the recording medium initialize method according to the present invention comprises the first writing step of recording the disc ID for encryption in the administration area 11, the second writing step of recording the disc ID and the MCN (media identification number information) in the data area 12b in the subcode-Q mode 2, and the third writing step of recording the ISRC serial number (serial number information) in the data area 12b in the subcode-Q mode 3.

Following this, a reservation is made for a Write command memory (step A8), and DirectCD logical format data is set in the Write command memory (step A9). In addition, in a step A10, a Write command is sent for recording the logical format data. Incidentally, the step A10 takes place generally immediately after the lead-in. Lastly, the CD-RW disc (CD-RW media) 47b is ejected from the CD-R/RW drive 46 (step A11), and the initialize step comes to an end (step A12).

At this time, the writing to one session reaches completion. If the writing takes place between a plurality of sessions, the above-mentioned steps are repeated several times. After the logical format is made in this way, the user can record data from the next session.

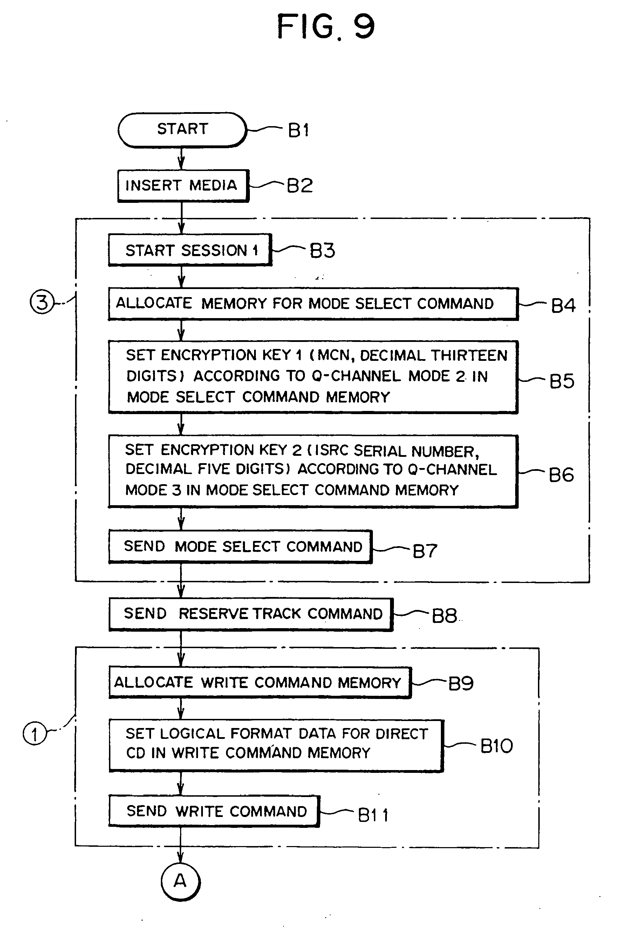

FIGs. 9, 10 and 11 are initialization flow charts for prevention from the copy of a CD-R, according to the first embodiment of the present invention, showing an example of writing of two sessions of a session 1 (SESSION 1) and a session 2 (SESSION 2). The flow charts shown in FIGs. 9, 10 and 11 differ from that of FIG. 8 in that two types of logical format data are written. Incidentally, these flows are executed through the use of the encryption key imprinting equipment 19 shown in FIG. 7.

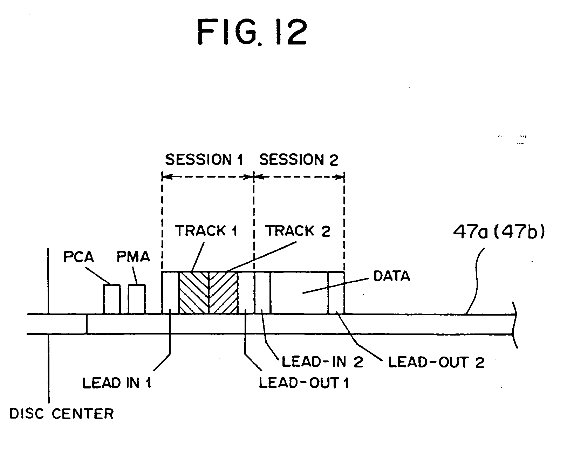

A data layout on the CD-R disc 47a (or the CD-RW disc 47b) after the recording according to the flow charts of FIGs. 9, 10 and 11 is as shown in FIG. 12.

FIG. 12 is an illustration of a data layout on a CD-R/RW after the initialization according to the first embodiment of the present invention. In FIG. 12, a track 1 on the CD-R disc 47a (or the CD-RW disc 47b) represents logical format data for ISO9660, while a track 2 represents logical format data for DirectCD. As well be described layer, the track 1 is written after the track 2 is written.

Initialization steps start at a step B1 (see FIG. 9). In a step B2, the CD-R disc (CD-R media) 47a is inserted into the CD-R/RW drive 46, then followed by a step B3 to start the writing in the session 1. That is, as well as mentioned above, an allocation is made for a Mode Select command memory (not shown) (step B4), and in a step B5, the encryption key 1 is set in the Select command memory while in a step B6, the encryption key 2 is set in the Select command memory. Subsequently, in a step B7, a Mode Select command is sent, thereby setting these encryption key 1 and encryption key 2 (second writing step, third writing step).

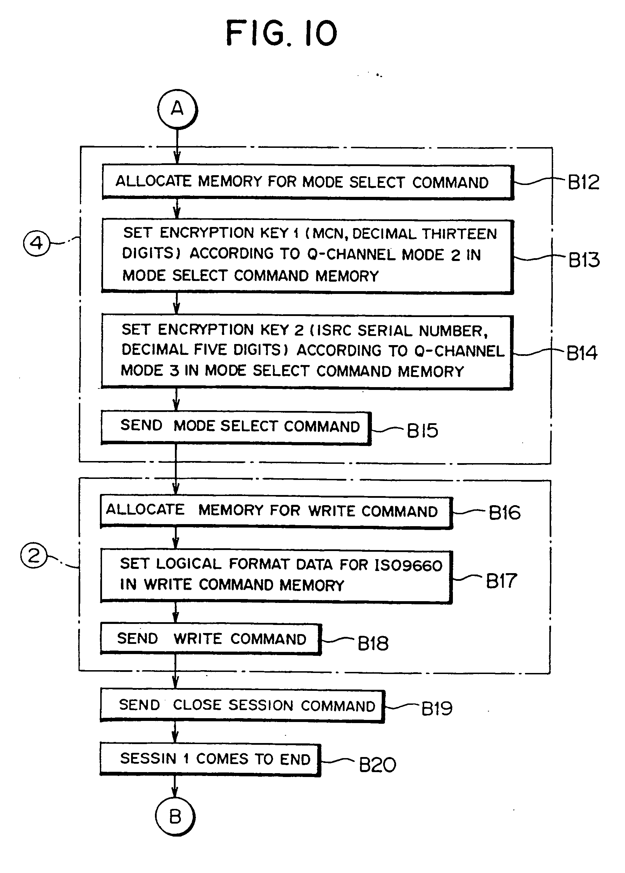

Following this, in a step B8, for the use as a logical format area of ISO9660 afterwards, a Reserve Track command is sent to secure the track 1 (see FIG. 12) for the ISO9660 logical format. After the track 1 is reserved, in steps (steps B9 to B11) designated at circled numeral 1, DirectCD logical format data is written in the track 2 (see FIG. 12). That is, a Write command memory is allocated (step B9), the DirectCD logical format data is set in a Writ command memory (step B10), and in the step B11, a Write command is sent so that the logical format data is recorded actually. Accordingly, the steps designated at circled numeral 3 are implemented for the steps designated at the circled numeral 1. Moreover, subsequent to a portion denoted at A in FIG. 9, the writing of the ISO9660 logical format data starts at the uppermost portion denoted at A in FIG. 10.

That is, in like manner, an allocation is made for a Mode Select command memory (not shown) (step B12), the encryption key 1 is put in the Select command memory (step B13), the encryption key 2 is set in the Select command memory (step B14), and in a step B15, a Mode Select command is sent, thus setting these encryption key 1 and encryption key 2 (second writing step, third writing step).

Following this, the writing of the ISO9660 logical format data takes place in steps (steps B16 to B18) designated at circled numeral 2, and the ISO9660 logical format is set in the track 1 reserved in the aforesaid step B8.

That is, the Write command memory is allocated (step B16), and the ISO9660 logical format data is set in the Write command memory (step B17). In addition, in a step B18, a Write command is sent to record the logical format data. Thus, the steps designated at circled numeral 4 are executed for the steps designated at circled numeral 2. Still additionally, in a step B19, a Close Session command is sent so that the lead-in 1 and the lead-out 1 are written as shown in FIG. 12, then the writing in the session 1 comes to an end (step B20).

Upon the completion of this session 1, the session 1 is made to be readable by an ordinary drive equipment, and at the recording of data in the session 2 and sections subsequent thereto, the encryption can be made through the use of the encryption key recorded in the session 1.

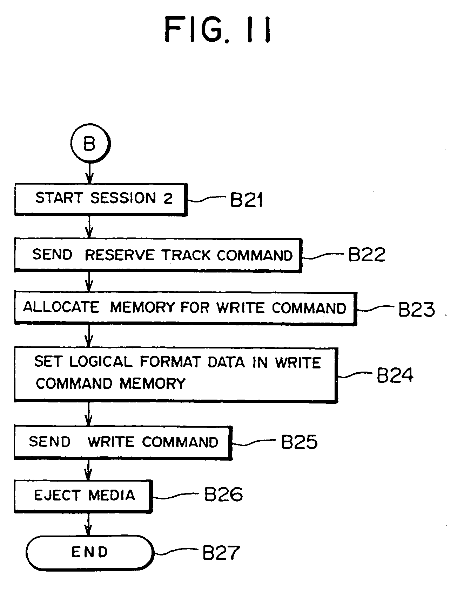

Furthermore, subsequent to a portion indicated by B in FIG. 10, the writing in the session 2 starts at the uppermost portion indicated by B in FIG. 11.

It is possible that the encryption key for the track 1 and the encryption key for the track 2 either agree with or differ from each other. Accordingly, there is a case in which an operator can set separately a plurality of encryption keys 1, 2, and in this case, the encryption keys can individually be set for each track.

In the session 2 starting at a step B21, a Reverse Track command is first sent (step B22), a Write command memory is allocated (step B23), logical format data is set in a Write command memory (step B24), and in a step B25, a Write command is sent, thereby recording the logical format data. Lastly, the CD-R disc (CD-R media) 47a is ejected from the CD-R/RW drive 46 (step B26), and the initialization step reaches completion (step B27).

It is possible that the encryption key for the session 2 either agree with or differ from that for the session 1. Accordingly, there is a case in which an operator can set separately a plurality of encryption keys 1, 2, which allows the individual setting of the encryption keys.

Furthermore, when a user makes the first copy using an initialized disc (CD-R disc 47a or CD-RW disc 47b), the read multimedia data such as audio, visual or data is encrypted through the use of an encryption key proper to the disc (media) and the user can get one specific disc. However, even if the user tries to make the copy from the specific disc to another disc, the media number (disc ID, MCN, ISRC serial number) needed for the decryption of the encrypted data stored in the specific disc shows a difference, which can prevent the restoration of the original music or movie data.

Thus, although the data such as music or movie involved in copyright can only once be copied to one disc, the secondary copy from that copy disc to another disc is impossible, which provides an advantage in protecting the copyrighted data. Moreover, this has advantages of achieving the protection of the copyrighted data without previously adding the copyright fee to a recording/readout equipment.

In addition, since the data constituting the encryption key are recorded in the existing areas in a state distributed and the data recorded distributed are again collected to produce the encryption key, the encryption becomes possible without altering the disc formatting manner. And still, the distributing manner in the disc is diversely variable as needed, thus maintaining the concealment of the encryption key and providing an enhanced resistance of the encryption key.

Still additionally, since the production of the encryption key is made through the use of the random function Rnd () or the hash function Hash (), the same encryption keys are obtainable from the same disc IDs or the like, while difficulty is experienced in decoding the original disc ID or the like on the basis of the outputted encryption key. Thus, it is possible to enhance the concealment on the encryption key and prevent the copyrighted data from being secondary-copied.

### (A1) Description of First Modification of First Embodiment

An encryption method in a different mode is also available with the aforesaid encryption key imprinting equipment 19 being incorporated into a different equipment. Examples of this configuration will be described hereinbelow as first to third modifications of the first embodiment.

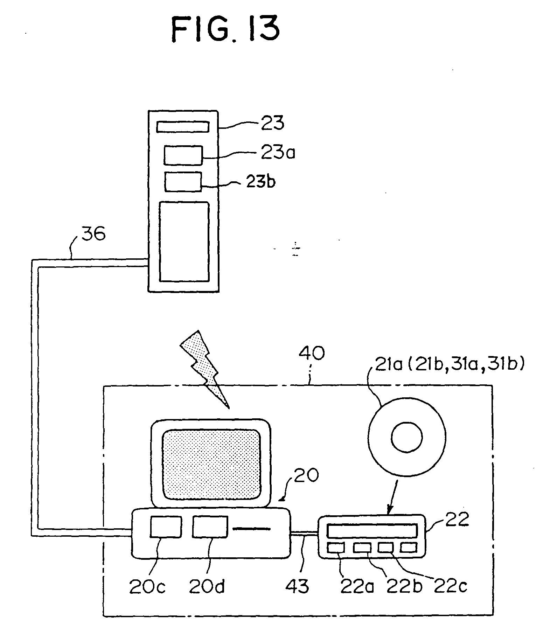

FIG. 13 is an illustrative view showing an encryption/decryption key recording equipment according to a first modification of the first embodiment of the present invention. In FIG. 13, an encryption/decryption recording equipment 40 is connected through a line 36 to an Internet server 23.

This encryption/decryption recording equipment 40 serves as an encryption equipment for encrypting multimedia data such as audio, visual or data to record it as encrypted data on an initialized CD-R disc or CD-RW disc, and also acts as a decryption equipment for decrypting the encrypted data, and it is made up of a personal computer 20, a cable 43 and a CD-R/RW drive 22.

Among the encryption key producing methods, there are three types of modes, as well as described above in the first embodiment (see FIGs. 39 to 40). That is, it is possible that the encryption is made using a disc ID, MCN or ISRC serial number individually, or that the encryption is made using information on a combination of the disc ID, MCN and ISRC serial number. In addition, it is also possible that the encryption is made using a random function with a seed based on the disc ID, MCN or ISRC serial number, or that the encryption is made using a random function with seed based on information on a combination of the disc ID, MCN and ISRC serial number. Still additionally, it is also possible that the encryption is made using a hash function with seed based on a key message, disc ID, MCN or ISRC serial number, or that the encryption is made using a hash function with seed based on information on a combination of the key message, disc ID, MCN and ISRC serial number.

A disc to be inserted into the CD-R/RW drive 22 is an initialized CD-R disc 21a or CD-RW disc 21b, or a data-recorded CD- disc 31a or CD-RW disc 31b. Moreover, a disc ID for the encryption is imprinted (recorded) in an administration area 11 (see FIG. 1). In the following embodiments and the modifications thereof, the initialized CD-R disc 21a or CD-RW disc 21b will sometimes be referred to as a "write disc". Still moreover, likewise, the data-recorded CD-R disc 31a or CD-RW disc 31b will sometimes be referred to as a "read disc", while the CD-R disc 21a, CD-RW disc 21b, CD-R disc 31a and CD-RW disc 31b will sometimes be referred to generally as a "disc".

The personal computer 20 is composed of a decryption means 20c and a second encryption key producing means 20d. The decryption means 20c is capable of decrypting the encrypted information through the use of an encryption key for playing back multimedia data including information such as audio, visual or data, and the second encryption key producing means 20d is for producing an encryption key on the basis of the disc ID, MCN and ISRC serial number. These features are exhibited by, for example software. The description of the other features of the personal computer 20 will be omitted.

The CD-R/RW drive 22 is designed to be capable of reading or writing the CD-R disc 21a or CD-RW disc 21b, and is composed of a readout means 22a, an encrypted media information preserving means 22b and a second readout means 22c.

The readout means 22a is capable of reading out a disc ID of a write disc or a read disc. In addition, the write disc has, as well as the disc 10 shown in FIG. 1, an administration area 11 readable by the CD-R/RW drive 22 but inaccessible to a user and a data area 12b readable by the CD-R/RW drive 22 and arbitrarily accessible to the user, with an disc ID for the encryption being recorded in the administration 11.

The encrypted media information preserving means 22b is capable of preserving encrypted data in the data area 12b of the write disc having the same disc ID, while the second readout means 22c is capable of reading out the disc IDs of the write disc and the read disc. The write disc and the read disc have, as well as the disc 10 shown in FIG. 1, an administration area 11 readable by the CD-R/RW drive 22 but inaccessible to a user and a data area 12b readable by the CD-R/RW drive 22 and arbitrarily accessible to the user, with the disc ID for the encryption being recorded in the administration 11 and the encrypted information being recorded in the data area 12b.

Each of these features is exhibited by a drive equipment (not shown) in the CD-R/RW drive 22. The detailed description of the other features of the CD-R/RW drive 22 will be omitted.

Furthermore, the Internet server 23 is for encrypting and transferring multimedia data such as audio, visual and data on the Internet, and is composed of an encrypted media information generating means 23a and an encryption key producing means 23b. The encrypted media information generating means 23a is the same as the above-mentioned encrypted media information generating means 20a, and the detailed description will be omitted. The encryption key producing means 23b is made to generate an encryption key on the basis of a disc ID, an MCN and a serial number of ISRC.

In addition, the line 36 is for making a connection between the Internet server 23 and the encryption/decryption recording equipment 40, and this line feature is exhibited through, for example, a local area network. Incidentally, the cable 43 is the same as mentioned above, and the description thereof will be omitted.

Accordingly, in the encryption/decryption recording equipment 40, the readout means 22a of the CD-R/RW drive 22 reads out a disc ID, an MCN and a serial number of ISRC as media numbers from a write disc inserted (first disc identification information readout step). The media numbers read out are inputted through the cable 43 to the personal computer 20, and the media numbers are then transmitted through the line 36 to the Internet server 23, and the encryption key producing means 23b of the Internet server 23 produces an encryption key on the basis of a combination of the disc ID and the MCN, a combination of the disc ID and the ISRC serial number, or a combination of the disc ID, the MCN and the ISRC serial number (first encryption key producing step).

Moreover, in the encrypted media information generating means 23a of the Internet server 23, the multimedia data such as audio, visual or data is read out (first readout step) and is encrypted through the use of the encryption key using the aforesaid media numbers to be outputted as encrypted data.

Still moreover, this encrypted data is inputted through the line 36 to the CD-R/RW drive 22 in the encryption/decryption recording equipment 40, and encrypted data is generated through the use of the encryption key in the encrypted media information preserving means 22b of the CD-R/RW drive 22 to be recorded in the data area 12b (see FIG. 1) of a disc having the disc ID transmitted, thereby producing a specific disc (specific recording medium producing step).

On the other hand, the decryption is made as follows. That is, a write disc or a read disc is inserted into the CD-R/RW drive 22, and in the second readout means 22c of the CD-R/RW drive 22, the disc ID, MCN and ISRC of that disc are read out, and these disc ID, MCN and ISRC serial number are inputted through the cable 43 to the personal computer 20. In like manner, encrypted data is read out from the write disc or the read disc.

In addition, in the second encryption key producing means 20d of the personal computer 20, an encryption key is produced on the basis of a combination of the disc ID and the MCN, a combination of the disc ID and ISRC serial number or a combination of the disc ID, the MCN and the ISRC serial number. Still additionally, in the decryption means 20c of the personal computer 20, only when the encryption key agrees with the encryption key transmitted, the encrypted data appears in a state decrypted, and the encrypted data on the write disc or the read disc is decrypted-through the use of the encryption key.

With this arrangement, the encryption and the decryption are made for prevention from the copy of a CD-R/RW. First of all, in the initialization step described in the first embodiment, the encryption key is imprinted on the write disc, and audio data is subsequently recorded actually on the initialized write disc.

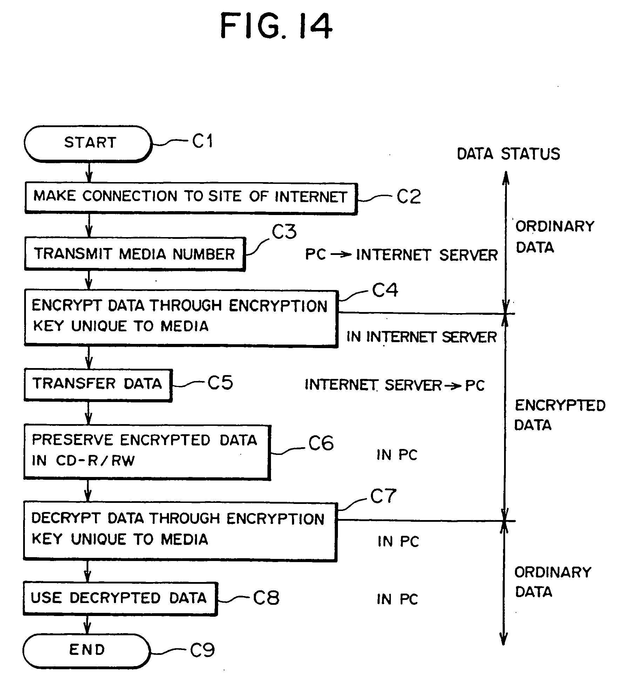

FIG. 14 is a flow chart showing a method for the prevention of the copy of a CD-Ror CD-RW, according to a first modification of the first embodiment of the present invention.

Copy prevention steps start at a step C1. A user makes a connection to a site of the Internet (step C2), and in a step C3, the media numbers (disc ID, MCN, serial number of ISRC) of that disc are transmitted from the encryption/decryption recording equipment 40 to the Internet server 23. In the steps C1 to C3, the data is in an ordinary state.

Then, in a step C4, the Internet server 23 encrypts the transmitted data through the use of the media numbers (disc ID, MCN, ISRC serial number) forming an encryption key unique to the disc (media). Subsequently, in a step C5, this encrypted data is transferred from the Internet server 23 to the encryption/decryption recording equipment 40. Still subsequently, in a step C6, the transferred data is processed in the personal computer 20 and is preserved on the write disc.

On the other hand, as a decryption step, in a step C7, the data is decrypted through the use of the encryption key unique to the disc (media), and in a step C8, the original data is playedback. Following this, the decryption step comes to an end at step C9. In this case, at the steps C6, C7 and C8, it is impossible to achieve the decryption with encryption keys other than the encryption key transmitted in the step C3.

In other words, it is impossible to restore the data written on a disc other than the disc used for the encryption key. That is, when the agreement between the media numbers does not take place, even if an encryption key is produced from the media numbers to decrypt the encrypted data, the original data is not reproducible.

Thus, in a case in which one specific disc having an encryption key imprinted is obtained in this way and an attempt is made for the copy from this specific disc to another disc, because the difference from the media numbers (disc ID, MCN, ISRC serial number) required for decrypting the encrypted data stored on the specific disc takes place, difficulty is encountered in restoring the original data. Moreover, since the disc ID, MCN and ISRC serial number are transmitted instead of the encryption key being transmitted directly on the Internet, there is no possibility that the encryption key is stolen by others.

Still moreover, although copyrighted data such as music or movie can be copied only once onto one disc, the secondary copy from this copy disc from another disc is inhibited, thereby securing the protection of the copyrighted data. This provides an advantage in achieving the protection of the copyrighted data without adding a copyright fee previously to the recording/readout equipment.

In addition, since data constituting an encryption key are recorded in the existing areas in a state distributed at the recording of the encryption key and the data recorded in a state distributed are collected to produce the encryption key, the encryption can be made without altering the formatting method on the disc. And still, since an encryption key distributing manner is diversely variable as needed, the concealment of the encryption key is maintainable, thus providing an enhanced resistance of the encryption key.

Still moreover, since the encryption key is produced through the use of a random function Rnd () or a hash function Hash (), the same encryption keys are obtainable from the same disc IDs or the like and the decoding of the original disc ID or the like through the encryption key outputted becomes unattainable. Accordingly, the encryption key takes on an added concealment, thus protecting the copyrighted data from the secondary copy.

### (A2) Description of Second Modification of First Embodiment

The present invention is also applicable to a mode in which data is read out from a music CD.

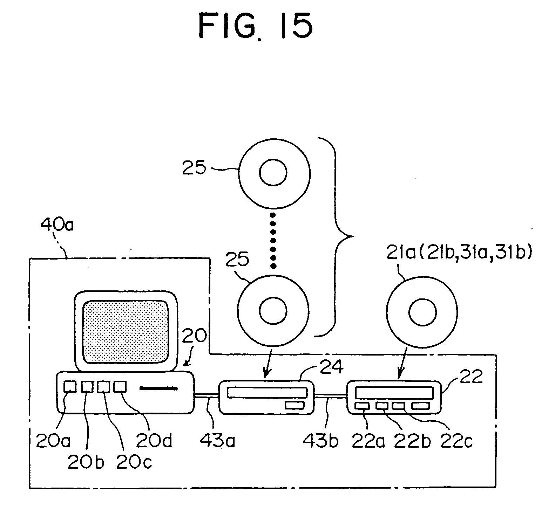

FIG. 15 is an illustrative view showing an encryption/decryption recording equipment according to a second modification of the first embodiment of the present invention. In FIG. 15, an encryption/decryption recording equipment 40a is made up of a CD drive 24, cables 43a and 43b in addition to the personal computer 20 and the CD-R/RW drive 22.

Moreover, each of CD media 25 accommodates audio data, and is a so-called music CD, and a write disc (CD-R disc 21a, CD-RW disc 21b) or a read disc (CD-R disc 31a, CD-RW disc 31b) is inserted into the CD-R/RW drive 22. The CD drive 24 shown in FIG. 15 is for reading out and playing back data from the CD media 25, and selectively accommodates a plurality of CD media 25.

The cable 43a is for making an electrical connection between the personal computer 20 and the CD drive 24, while the cable 43b is for establishing an electrical connection between the CD drive 24 and the CD-R/RW drive 22. This configuration enables the interchange in data and encrypted data between the personal computer 20 and the CD-R/RW drive 22.

The personal computer 20 is made up of an encrypted media information generating means 20a, an encryption key producing means 20b, a decryption means 20c and a second encryption key producing means 20d. The encrypted media information generating means 20a is designed to encrypt multimedia data through the use of encryption key based on a disc ID, an MCN and an ISRC serial number for outputting encrypted data. The encryption key producing means 20b is for producing an encryption key on the basis of a disc ID, an MCN and/or an ISRC serial number.

As methods of producing an encryption key, there are three modes, as well as described in the first embodiment (see FIGs. 39 to 40). That is, the encryption can be made by individually using a disc ID, an MCN or an ISRC serial number, or by using information on a combination of a disc ID, an MCN and an ISRC serial number. Moreover, the encryption can also be made by using a random function based a disc ID, an MCN or an ISRC serial number or by using a random function based on information on a combination of a disc ID, an MCN and an ISRC serial number. Still moreover, the encryption can also be made by using a hash function based on a key message, a disc ID, an MCN or an ISRC serial number or by using a hash function based on information on a combination of a key message, a disc ID, an MCN and an ISRC serial number.

The decryption means 20c is made to decrypt the encrypted data through the use of an encryption key for reproducing the multimedia data including information such as audio, visual or data. The second encryption key producing means 20d is for producing an encryption key on the basis of a disc ID, an MCN and/or an ISRC serial number. These are the same as those mentioned above, and detailed description thereof will be omitted.

The CD-R/RW drive 22 is the same as that described in the first modification of the first embodiment, and the repeated description thereof will be omitted.

Accordingly, the encryption is made as follows. That is, the readout means 22a in the CD-R/RW drive 22 reads out a disc ID, MCN and ISRC serial number of a write disc inserted therein, as media numbers (first disc identification information readout step), with the media number read out being inputted through the cables 43b and 43a to the personal computer 20. Then, the encryption key producing means 20b of the personal computer 20 produces an encryption key (first encryption key producing step).

On the other hand, for example, audio data recorded on the CD media 25 is read out in the CD drive 24 (first readout step), with the data being inputted through the cable 43a to the personal computer 20. Moreover, in the personal computer 20, the encrypted media information generating means 20a encrypts the data, read out, through the use of the encryption key, with the encrypted data being inputted through the cables 43a and 43b to the CD-R/RW drive 22. In the encrypted media information preserving means 22b, the encrypted data is recorded in the data area 12b (see FIG. 1) of the write disc having the disc ID read out at the encryption, thereby producing a specific disc (specific recording medium producing step).

Furthermore, the data decryption is made as follows. That is, a write disc or a read disc is inserted into the CD-R/RW drive 22. In the CD-R/RW drive 22, the second readout means 22c reads out the disc ID, MCN and ISRC serial number therefrom, and inputs them through the cables 43b and 43a to the personal computer 20. Moreover, in the personal computer 20, the second encryption key producing means 20d produces an encryption key on the basis of the disc ID, MCN and ISRC serial number read out. Still moreover, in the personal computer 20, the decryption means 20c decrypts the encrypted data read out from the write disc or the read disc, only when the encryption key therefor agrees with the encryption key used for the encryption, thereby playing back the multimedia data.

This arrangement enables the encryption and decryption for prevention of the copy of a CD-RW.

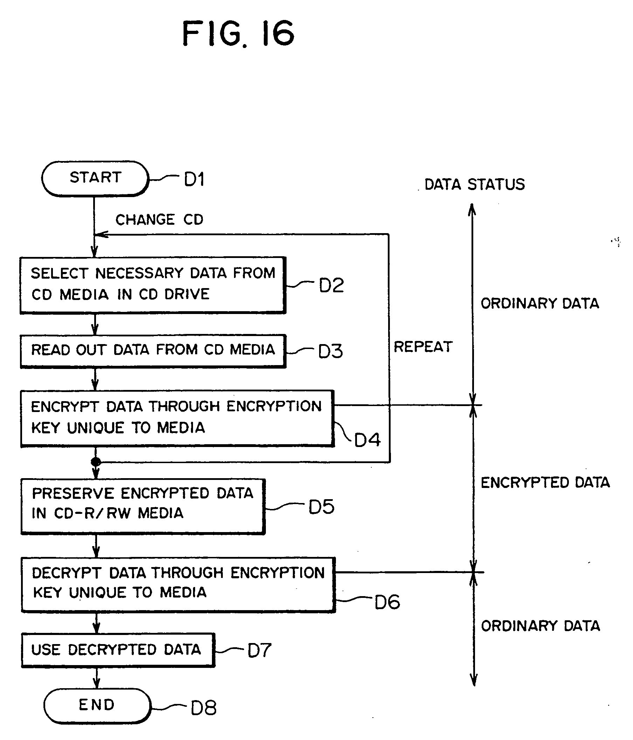

FIG. 16 is a flow chart showing a CD-R or CD-RW copy prevention method according to a second modification of the first embodiment of the present invention.

Copy prevention steps start at a step D1. First, in the CD drive 24, necessary data is selected (step D2) and is read out from the CD media 25 (step D3). Up to this step, the data is in the ordinary state.

Following this, in a step D4, the data is encrypted through the use of an encryption key unique to that disc (media), which is made with a proper combination of an MCN, an ISRC serial number and a disc ID, and in a step D5, the encrypted data is preserved on a write disc (CD-R/RW media).

On the other hand, as a decryption step, in a step D6, the data is decrypted through the use of the encryption key unique to that disc (media), and in a step D7, the decrypted data is put to use. The decryption step comes to an end at a step D8.

In the step D4, it is also appropriate that, after the data read out is encrypted, other data is read out and encrypted. In this case, the disc (represented as CD in FIG. 16) is replaced with another disc and the steps D2 to D4 are implemented repeatedly.

Incidentally, in a case in which, in the steps D5 and D6, the encrypted data is written on a disc other than the disc related to the encryption key, the restoration of the data becomes impossible.

As mentioned above, when a user makes the first copy, the read multimedia data such as audio, visual or data is encrypted by an encryption key unique to that disc to provide one specific disc to the user. Conversely, even if the user attempts to make the copy from the specific disc to another disc, the difference from the media numbers (disc ID, MCN, ISRC serial number) needed for the decryption of the encrypted data stored on the specific disc takes place, and this makes it impossible to restore the original audio or video data.

Furthermore, although the copyrighted data such as music or movie can be copied only once to one disc in this way, the secondary copy from the copy disc to another disc is inhibited, thereby protecting the copyrighted data. Thus, it is possible to protect the copyrighted data without adding a copyright fee to the recording/readout equipment.

Still furthermore, since data constituting an encryption key are recorded in the existing areas in a state distributed at the recording of the encryption key and the data recorded in a state distributed are collected to produce the encryption key, the encryption can be made without altering the formatting method on the disc. And still, since the distributing manner on the disc can diversely be varied as needed, the concealment of the encryption key is maintainable, thus providing an enhanced resistance of the encryption key.

Moreover, since the encryption key is produced through the use of a random function Rnd () or a hash function Hash (), the same encryption keys are obtainable from the same disc IDs or the like and the decoding of the original disc ID or the like through the encryption key outputted becomes unattainable. Accordingly, the encryption key takes on an added concealment, thus protecting the copyrighted data from the secondary copy.

### (A3) Description of Third Modification of First Embodiment

In addition, the present invention is also applicable to an encryption method in a different mode in which data is transmitted.

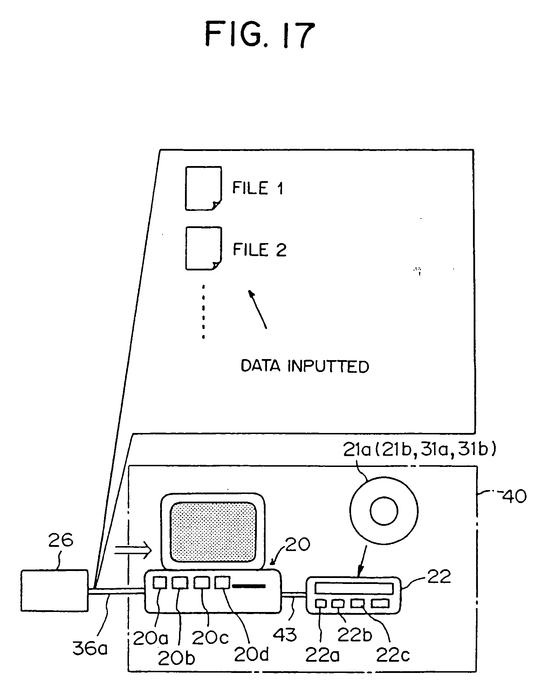

FIG. 17 is an illustrative view showing an encryption/decryption recording equipment according to a third modification of the first embodiment of the present invention. In FIG. 17, an encryption/decryption recording equipment 40 is connected through a line 36a to a data transmission equipment 26. This encryption/decryption recording equipment 40 is composed of a personal computer 20 and a cable 43.

The personal computer 20 is made up of an encrypted media information generating means 20a, an encryption key producing means 20b, a decryption means 20c and a second encryption key producing means 20d. These means are the same as those mentioned above, and the detailed description thereof will be omitted. The CD-R/RW drive 22 and the cable 43 are the same as those mentioned above, and the repeated description thereof will be omitted. The CD-R/RW drive 22 can accommodates a write disc or a read disc.

Moreover, the methods of producing an encryption key are the same as those described in the first embodiment (see FIGs. 39 to 40). That is, the encryption can be made by individually using a disc ID, an MCN or an ISRC serial number, or by using information on a combination of a disc ID, an MCN and an ISRC serial number.

Still moreover, the encryption can also be made by using a random function based a disc ID, an MCN or an ISRC serial number or by using a random function based on information on a combination of a disc ID, an MCN and an ISRC serial number. Still moreover, the encryption can also be made by using a hash function based on a key message, a disc ID, an MCN or an ISRC serial number or by using a hash function based on information on a combination of a key message, a disc ID, an MCN and an ISRC serial number.

The data transmission equipment 26 is for transmitting a data file or the like to the encryption/decryption recording equipment 40, and for example, is designed to make an analog-to-digital conversion on analog data inputted thereto for transmitting the resultant digital data.

The line 36a is for making a connection between the data transmission equipment 26 and the encryption/decryption recording equipment 40, and for example, is connected to a serial port (not shown) of the personal computer 20.

Accordingly, for example, analog data is A/D-converted in the data transmission equipment 26 and inputted through the line 36a to the encryption/decryption recording equipment 40, and further inputted through the serial port to the personal computer 20.

Meanwhile, in the CD-R/RW drive 22, the readout means 22a reads out, as the media numbers, the disc ID, MCN and ISRC serial number of the disc inserted thereinto, with the media numbers read out being inputted through the cable 43 to the personal computer 20 so that the encryption key producing means 20b of the personal computer 20 produces an encryption key.

Moreover, with respect to the data from the serial port, the encryption is made through the use of the encryption key in the encrypted media information generating means 20a of the personal computer 20, with the encrypted data being inputted through the cable 43 to the CD-R/RW drive 22.

Still moreover, the encrypted data is preserved in the data area 12b (see FIG. 1) of the write disc by means of the encrypted media information preserving means 22b of the CD-R/RW drive 22.

Furthermore, the decryption from the write disc or the read disc is made as follows. That is, the second readout means 22c of the CD-R/RW drive 22 reads out the disc ID, MCN and ISRC serial number therefrom, and the second encryption key producing means 20d of the personal computer 20 produces an encryption key for the decryption, and further the decryption means 20c of the personal computer 20 decrypts the encrypted data through the use of the produced encryption key.

This arrangement enables the encryption and decryption for the CD-R/RW copy prevention.

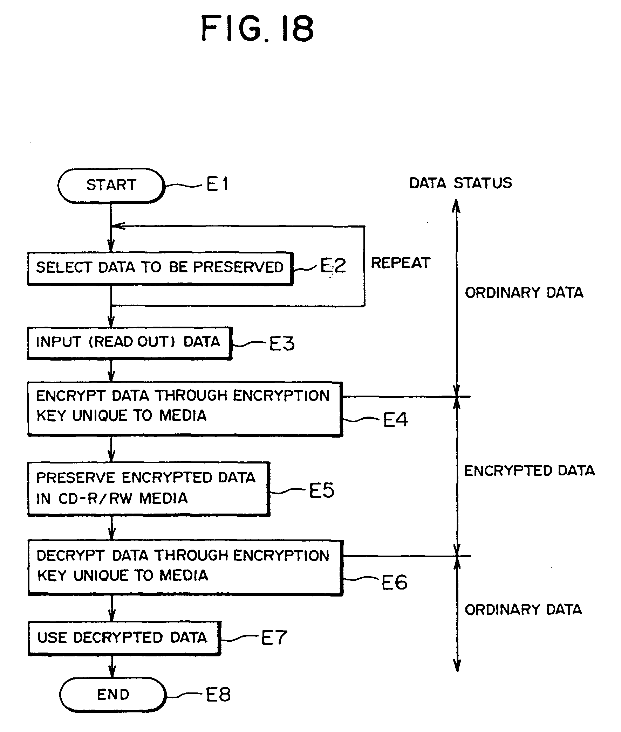

FIG. 18 is a flow chart showing a copy prevention method for a CD-R or CD-RW according to a third modification of the first embodiment of the present invention.

An encryption step starts at a step E1. First, after the selection of data preserved in a step E2, the file data is inputted (step E3). Incidentally, up to this step, the data is in the ordinary state.

Following this, in a step E4, the data is encrypted through the use of an encryption key unique to that disc (media) which produced with a proper combination of an MCN, an ISRC serial number and a disc ID, and in a step E5, the encrypted data is preserved on a write disc (CD-R/RW media).

On the other hand, as a decryption step, in a step E6, the data is decrypted with the encryption key unique to that disc, and in a step E7, the decrypted data is put to use, then followed by a step E8 at which the encryption step comes to an end.

In the step E2, it is also possible to read out another data additionally. In this case, the data selection is made repeatedly.

Incidentally, in a case in which, in the steps E5 and E6, the encrypted data is written on a disc other than the disc related to the encryption key, the restoration of the data becomes impossible.

As mentioned above, when a user makes the first copy, the read multimedia data such as audio, visual or data is encrypted by an encryption key unique to that disc to provide one specific disc to the user.

Conversely, even if the user attempts to make the copy from the specific disc to another disc, because of the difference from the media numbers (disc ID, MCN, ISRC serial number) needed for the decryption of the encrypted data stored on the specific disc, it's impossible to restore the original audio or video data.

Furthermore, although the copyrighted data such as music or movie can be copied only once to one disc in this way, the secondary copy from the copy disc to another disc is inhibited, thereby protecting the copyrighted data. Thus, it is possible to protect the copyrighted data without adding a copyright fee to the recording/readout equipment.

Still furthermore, since data constituting an encryption key are recorded in the existing areas in a state distributed at the recording of the encryption key and the data recorded in a state distributed are collected to produce the encryption key, the encryption can be made without altering the formatting method on the disc. And still, since the distributing manner on the disc is diversely variable as needed, the concealment of the encryption key is maintainable, thus providing an enhanced resistance of the encryption key.

Moreover, since the encryption key is produced through the use of a random function Rnd () or a hash function Hash (), the same encryption keys are obtainable from the same disc IDs or the like and the decoding of the original disc ID or the like through the encryption key outputted becomes unattainable. Accordingly, the encryption key takes on an added concealment, thus protecting the copyrighted data from the secondary copy.

### (B) Description of Second Embodiment of the Invention

The encryption equipment and decryption equipment described above in the first embodiment can also be used in a state incorporated into an audio equipment.

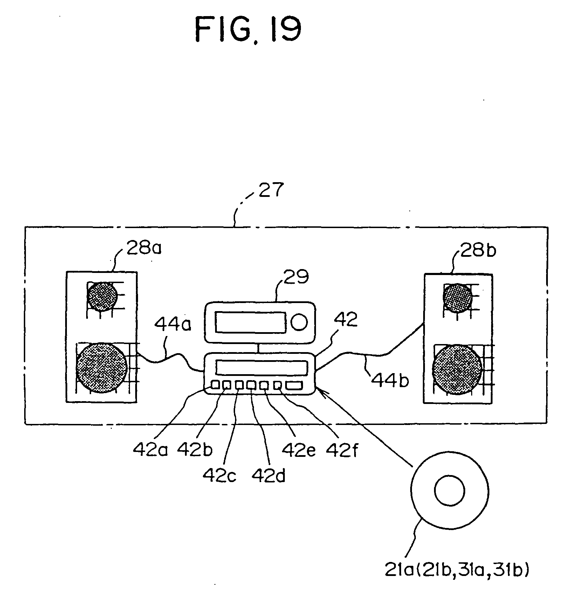

FIG. 19 is an illustrative view showing an audio equipment according to a second embodiment of the present invention. In FIG. 19, an audio equipment 27 comprises an encryption means and a decryption means and further is provided with a CD-R/RW drive 42, speakers 28a and 28b and an audio readout apparatus 29.

In addition, a disc to be inserted into this CD-R/RW drive 42 is not only a write disc initialized but also a read disc having data recorded. That is, these discs (media) are of an optically recording type, and a data area 12b (see FIG. 1) thereof is of a type allowing a user to write data at least once.

In this case, the encryption means (not shown) is designed to encrypt multimedia data including information such as audio and data and to record it as encrypted media information, while the decryption means (not shown) is made to decrypt encrypted media information which is multimedia data including information such as audio and data recorded in a state encrypted.

The CD-R/RW drive 42 is made to encrypt multimedia data including information such as audio and data for recording it as encrypted media information, and is made up of a readout means 42a, an encrypted media information generating means 42b, an encrypted media information preserving means 42c, a second readout means 42d, a second encryption key producing means 42e and a decryption means 42f.

The readout means 42a is made to read out a disc ID from a write disc initialized and a read disc having data recorded. As well as the disc 10 shown in FIG. 1, each of the initialized write disc and the data recorded read disc has an administration area 11 readable by the CD-R/RW drive 42 but inaccessible to a user and a data area 12b readable by the CD-R/RW drive 42 and arbitrarily accessible to the user, with a disc ID for encryption being recorded in the administration area 11.

The encrypted media information generating means 42b is made to encrypt multimedia data through the use of an encryption key based on a disc ID, an MCN and an ISRC serial number and to output it as encrypted media information, and the encrypted media information preserving means 42c is made to preserve this encrypted media information in the data area 12b (see FIG. 1).

The encryption key producing methods in this case are the same as those described above in the first embodiment (see FIGs. 39 to 40). That is, it is possible that the encryption is made using a disc ID, MCN or ISRC serial number individually, or that the encryption is made using information on a combination of the disc ID, MCN and ISRC serial number. In addition, it is also possible that the encryption is made using a random function based on the disc ID, MCN or ISRC serial number, or that the encryption is made using a random function based on information on a combination of the disc ID, MCN and ISRC serial number. Still additionally, it is also possible that the encryption is made using a hash function based on a key message, disc ID, MCN or ISRC serial number, or that the encryption is made using a hash function based on information on a combination of the key message, disc ID, MCN and ISRC serial number.

The second readout means 42d is made to read out a disc ID from a write disc and a read disc, while the second encryption key producing means 42e is for producing an encryption key for decryption on the basis of a disc ID, an MCN and an ISRC serial number. The decryption means 42f is made to decrypt encrypted information through the use of an encryption key based on a disc ID, an MCN and an ISRC serial number for playing back multimedia information including information such as audio and data.

Of these features, the features of the readout means 42a, the encrypted media information preserving means 42c and the second readout means 42d are exhibited by a drive apparatus of the CD-R/RW drive 42. On the other hand, the features of the encrypted media information generating means 42b, the second encryption key producing means 42e and the decryption mean 42f are exhibited by, for example, software or the like incorporated internally.

The speaker 28a is a speaker for the left channel of a stereo audio while the speaker 28b is a speaker for the right channel of the stereo audio. The audio readout apparatus 29 is made to read out, regenerate and amplify audio data which in turn, is outputted from the speakers 28a and 28b.

Accordingly, the encryption is made as follows. That is, a write disc is inserted into the readout means 42a of the CD-R/RW drive 42 so that a disc ID, MCN and ISRC serial number of the disc inserted are read out as media numbers. Moreover, in the encrypted media information generating means 42b of the CD-R/RW drive 42, the multimedia data is encrypted through the use of an encryption key based on the disc ID, MCN and ISRC serial number to be outputted as encrypted media information. Still moreover, by the encrypted media information preserving means 42c of the CD-R/RW drive 42, the encrypted media information is preserved in the data area 12b (see FIG. 1) of the write disc.

Furthermore, the decryption is made as follows. That is, in the second readout means 42d of the CD-R/RW drive 42, the disc ID, MCN and ISRC serial number are read out from the write disc or the read disc, and in the second encryption key producing means 42e, an encryption key is produced on the basis of the disc ID, MCN and ISRC serial number, and further in the decryption means 42f, the encrypted media information is decrypted through the use of the encryption key.

With this arrangement, the user regenerates audio data stored in the audio equipment 27, and makes the encryption and the decryption for the prevention of CD-R/RW illegal copy.

That is, the audio data is properly read out and amplified and outputted from the left and right speakers 28a and 28b.

On the other hand, in a case in which the user makes a copy, audio data is first read and, when the read audio data is copied to a write disc for recording, an encryption key unique to the write disc is produced on the basis of an MCN, ISRC serial number and disc ID unique to the write disc, and the audio data is encrypted through the use of the encryption key. Even if the encrypted data is copied to a plurality of discs other than the disc from which the original encryption key has been read out, because of the difference of the encryption key unique to the disc, the restoration of the original audio data becomes impossible. Accordingly, the original data can be read out from only the specific disc.

As mentioned above, when a user makes the first copy, the read music data or voice data is encrypted with an encryption key unique to the disc, thereby presenting one specific disc to the user.

Conversely, even if the user attempts to make the copy from the specific disc to another disc, the difference from the media numbers (disc ID, MCN, ISRC serial number) needed for the decryption of the encrypted data stored on the specific disc takes place so that it is impossible to restore the original audio data or the like.

Furthermore, although the copyrighted data such as music can be copied only once to one disc in this way, the secondary copy from the copy disc to another disc is inhibited, thereby protecting the copyrighted data. Thus, it is possible to protect the copyrighted data without adding a copyright fee to the recording/readout equipment.

Still furthermore, since the administration area 11 and the data area 12b (see FIG. 1) of a CD-R disc or a CD-RW disc are used at the recording of the encryption key so that the data forming the encryption key are recorded in these areas in a state distributed and the data recorded in a state distributed are collected to produce the encryption key, the encryption can be made without altering the formatting method on the disc. And still, since the distributing manner is diversely variable as needed, it is possible to provide an enhanced resistance of the encryption key.

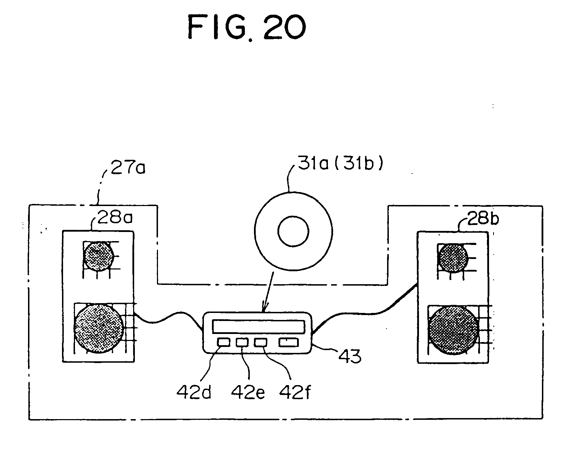

In addition, it is also possible to employ a mode in which only readout is made. FIG. 20 is an illustrative view showing another audio equipment according to the second embodiment of the present invention. In FIG. 20, an audio equipment 27a includes a decryption means (not shown) designed to decrypt encrypted media information which is multimedia data including information such as audio and data recorded in a state encrypted, and further includes a CD-R/RW drive 43 and speakers 28a and 28b.

The encryption key producing methods in this case are the same as those described above in the first embodiment (see FIGs. 39 to 40). That is, it is possible that the encryption is made using a disc ID, MCN or ISRC serial number individually, or that the encryption is made using information on a combination of the disc ID, MCN and ISRC serial number. In addition, it is also possible that the encryption is made using a random function based on the disc ID, MCN or ISRC serial number, or that the encryption is made using a random function based on information on a combination of the disc ID, MCN and ISRC serial number. Still additionally, it is also possible that the encryption is made using a hash function based on a key message, disc ID, MCN or ISRC serial number, or that the encryption is made using a hash function based on information on a combination of the key message, disc ID, MCN and ISRC serial number.

The disc to be inserted thereinto is a disc on which recorded is encrypted data generated through an encryption key.

The CD-R/RW drive 43 is designed to decrypt multimedia information, such as audio and data, recorded on CD-R discs 21a and 31a or CD-RW discs 21b and 31b in a state encrypted, through the use of an encryption key of these discs (media), and is composed of a second readout means 42d, a second encryption key producing means 42e and a decryption means 42f. The speakers 28a and 28b are the same as those mentioned above.

This arrangement accomplishes the readout of music and the decryption. That is, the second readout means 42d of the CD-R/RW drive 43 reads out a disc ID, MCN and ISRC serial number from a read disc, and the second encryption key producing means 42e produces an encryption key, and further the decryption means 42f decrypts the encrypted data on the read disc through the use of the encryption key to regenerate the multimedia data such as audio and data.

In this case, since the data encrypted and recorded on a disc other than this disc has a different unique encryption key, the restoration of the original audio data becomes impossible, whereas only the information recorded on only one disc is reproducible.

Thus, the user decrypts and reproduces the data through the use of an encryption key unique to that disc, and an encryption key other than that encryption key is not useful for the restoration of the original audio data or the like.

Although the copyrighted data such as music can be copied only once to one disc in this way, the secondary copy from the copy disc to another disc is inhibited, thereby protecting the copyrighted data. Thus, it is possible to protect the copyrighted data without adding a copyright fee to the recording/readout equipment.

Moreover, since, at the recording of the encryption key, the data forming the encryption key are recorded in the existing areas in a state distributed and the data recorded in a state distributed are collected to produce the encryption key, the encryption can be made without altering the formatting method on the disc. And still, since the distributing manner on the disc is diversely variable as needed, the concealment of the encryption key is maintainable, thus providing an added resistance of the encryption key.

Still moreover, since the encryption key is produced through the use of a random function Rnd () or a hash function Hash (), the same encryption keys are obtainable from the same disc IDs or the like and the decoding of the original disc ID or the like through the encryption key outputted becomes unattainable. Accordingly, the encryption key takes on an added concealment, thus protecting the copyrighted data from the secondary copy.

### (B1) Description of First Modification of Second Embodiment of the Invention

The encryption and decryption features described in the second embodiment can also be used in a state incorporated into a visual equipment.

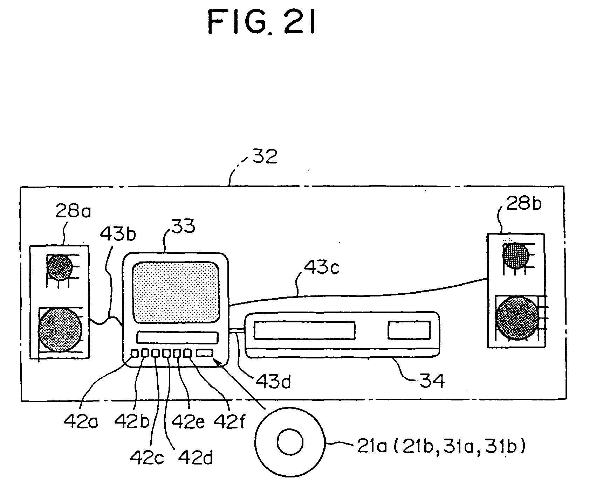

FIG. 21 is an illustrative view showing an audio/visual/data equipment according to a first modification of the second embodiment of the present invention. In FIG. 21, an audio/visual/data equipment 32 is designed to encrypt multimedia data including information such as audio, visual and data for recording it as encrypted media information, and is made to decrypt the encrypted media information which is the multimedia data including the information such as audio, visual and data recorded in a state encrypted. It is composed of a television 33 with CD-R/RW drive, an AV apparatus 34 and speakers 28a and 28b. A disc to be inserted thereinto is a write disc initialized, and it is also possible that a read disc on which data has already been written is inserted threinto to read out audio or visual data.

The CD-R/RW drive built-in television 33, in addition to a function as a television, has a function to encrypt voice data or music data through the use of an encryption key of a CD-R disc 21a or a CD-RW disc 21b and to record the encrypted data. It is made up of a readout means 42a, an encrypted media information generating means 42b, an encrypted media information preserving means 42c, a second readout means 42d, a second encryption key producing means 42e and a decryption means 42f. These have a function to process visual data in addition to the features described in the second embodiment, and the repeated description thereof will be omitted.

The encryption key producing methods in this case are the same as those described above in the first embodiment (see FIGs. 39 to 40). That is, it is possible that the encryption is made using a disc ID, MCN or ISRC serial number individually, or that the encryption is made using information on a combination of the disc ID, MCN and ISRC serial number. In addition, it is also possible that the encryption is made using a random function based on the disc ID, MCN or ISRC serial number, or that the encryption is made using a random function based on information on a combination of the disc ID, MCN and ISRC serial number. Still additionally, it is also possible that the encryption is made using a hash function based on a key message, disc ID, MCN or ISRC serial number, or that the encryption is made using a hash function based on information on a combination of the key message, disc ID, MCN and ISRC serial number.

The AV (Audio-Visual) apparatus 34 is for playing back audio or visual data, and for example, is a video playback equipment. The speakers 28a and 28b are the same as those mentioned above, and cables 43b, 43c and 43d are for making electrical connections between the aforesaid apparatuses.

With this configuration, the disc ID, MCN and ISRC serial number of a write disc are read out as media numbers in the readout means 42a of the CD-R/RW drive built-in television 33.

On the other hand, in the AV apparatus 34, audio or visual data is played back and inputted through the cable 43d to the CD-R/RW drive built-in television 33 where, after being appropriately reproduced and amplified, the data passes through the cables 43b and 43c to be outputted from the left and right speakers 28a and 28b.

In addition, in the encrypted media information generating means 42b of the CD-R/RW drive built-in television 33, an encryption key unique to that disc is produced on the basis of the disc ID, MCN and ISRC serial number so that data such audio is encrypted through the use of the encryption key to output encrypted data.

Still additionally, the encrypted data is preserved in the data area 12b of the write disc by the encrypted media information preserving means 42c of the CD-R/RW drive built-in television 33.

Furthermore, the decryption is made as follow. That is, the second readout means 42d of the CD-R/RW drive built-in television 33 reads out the disc ID, MCN and ISRC serial number, and the second encryption key producing means 42e produces an encryption key on the basis of the disc ID, MCN and ISRC serial number, and further the decryption means 42f decrypts the encrypted data through the use of the encryption key so that the multimedia data such as audio, visual and data again appears.

With this arrangement, the user plays back the information such as audio or visual stored in the audio/visual/data equipment 32, and makes the copy of audio data or visual data encrypted for the prevention of illegal copy of the CD-R/RW.

That is, when a user makes the first copy, the audio or visual information is read and the read audio or visual information is encrypted through the use of an encryption key unique to that disc, thus providing one specific disc to the user.

Conversely, even if the user attempts to make the copy from the specific disc to another disc, because the difference from the media numbers (disc ID, MCN, ISRC serial number) needed for the decryption of the encrypted data stored on the specific disc takes place, which makes it impossible to restore the original audio or video data.

Since the recording is made on only one disc in this way, it is possible to prevent the copyrighted data from being copied illegally.

Moreover, since the encryption key is produced through the use of a random function Rnd () or a hash function Hash (), the same encryption keys are obtainable from the same disc IDs or the like and the decoding of the original disc ID or the like becomes unattainable, thus providing an added concealment.

### (B2) Description of Second Modification of Second Embodiment of the Invention

On the other hand, a case of performing only the playback is as follows.

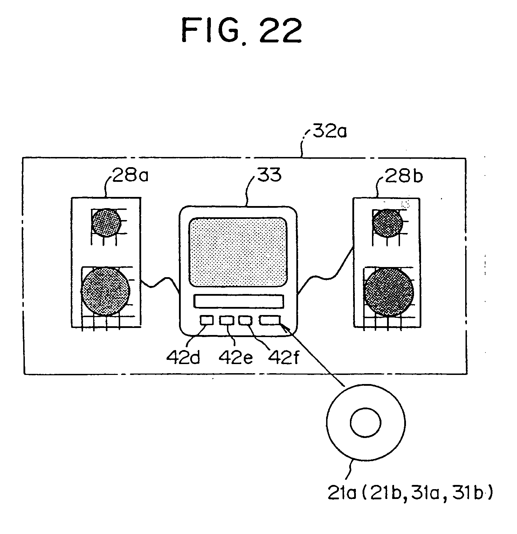

FIG. 22 is an illustrative view showing an audio/visual/data equipment according to a second modification of the second embodiment of the present invention. In FIG. 22, an audio/visual/data equipment 32a is designed to decrypt and play back encrypted media information which is multimedia information including information such as audio, visual and data recorded in a state encrypted, and is composed of a CD-R/RW drive built-in television 33 and speakers 28a and 28b.

The CD-R/RW drive built-in television 33 is for decrypting multimedia data such as audio, visual and data recorded on a CD-R disc or a CD-RW disc in a state encrypted, through the use of an encryption key of each of these discs, and is composed of a second readout means 42d, a second encryption key producing means 42e and a decryption means 42f. These are the same as those mentioned above, and the description thereof will be omitted.

The encryption key producing methods in this case are the same as those described above in the first embodiment (see FIGs. 39 to 40). That is, it is possible that the encryption is made using a disc ID, MCN or ISRC serial number individually, or that the encryption is made using information on a combination of the disc ID, MCN and ISRC serial number. In addition, it is also possible that the encryption is made using a random function based on the disc ID, MCN or ISRC serial number, or that the encryption is made using a random function based on information on a combination of the disc ID, MCN and ISRC serial number. Still additionally, it is also possible that the encryption is made using a hash function based on a key message, disc ID, MCN or ISRC serial number, or that the encryption is made using a hash function based on information on a combination of the key message, disc ID, MCN and ISRC serial number.

The disc to be inserted thereinto is a read disc on which recorded is data encrypted through the use of an encryption key.

Accordingly, the second readout means 42d of the CD-R/RW drive built-in television 33 reads out a disc ID, MCN and ISRC serial number of a read disc, the second encryption key producing means 42e produces an encryption key, and further the decryption means 42f decrypts the encrypted data of the read disc through the use of the produced encryption key.

With this configuration, the CD-R/RW drive built-in television 33 achieves the prevention of the copy of the read disc. That is, the data recorded on a disc other than this disc in a state encrypted cannot be restored as the original audio or visual data because of the difference of the unique disc encryption key, and the playback of only the information recorded on only one disc becomes feasible.

Thus, copyrighted data such as music or movie cannot be copied from the one disc to another disc, which achieves the protection of the copyrighted data. Moreover, the protection of the copyrighted data is attainable without adding a copyright fee previously to a recording/readout equipment.

Moreover, since, at the recording of the encryption key, the data forming the encryption key are recorded in the existing areas in a state distributed and the data recorded in a state distributed are collected to produce the encryption key, the encryption can be made without altering the formatting method on the disc. And still, since the distributing manner on the disc is diversely variable as needed, the concealment of the encryption key is maintainable, thus providing an added resistance of the encryption key.

Still moreover, since the encryption key is produced through the use of a random function Rnd () or a hash function Hash (), the same encryption keys are obtainable from the same disc IDs or the like. Yet moreover, since the decoding of the original disc ID or the like becomes unattainable, the encryption key takes on an added concealment.

### (C) Description of Third Embodiment of the Invention

In addition, a description will be given of other application examples.

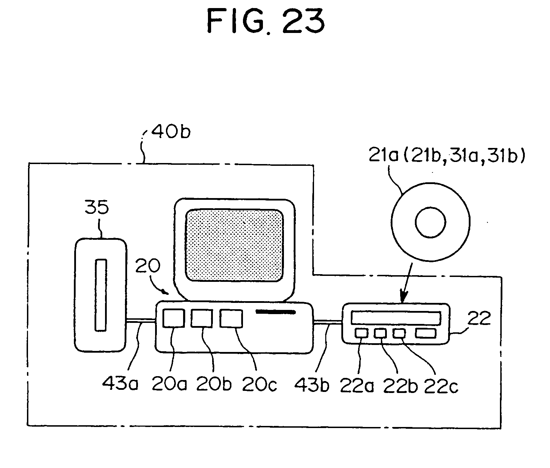

FIG. 23 is an illustration of an encryption/decryption recording equipment according to a third embodiment of the present invention. In FIG. 23, an encryption/decryption recording equipment 40b is designed to encrypt digital data through the use of an encryption key of a CD-R disc or a CD-RW disc for recording it on the CD-R disc or the CD-RW disc, and to decrypt the encrypted data recorded on the CD-R disc or the CD-RW disc for taking out the decrypted data. Moreover, this encryption/decryption recording equipment 40b is made up of a peripheral storage equipment 35, a personal computer 20 and a CD-R/RW drive 22. Still moreover, this encryption/decryption recording equipment 40b has an additional feature to change the encryption mode arbitrarily.

The peripheral storage equipment 35 is for accumulating data, and for example, is such a device as a harddisk or an MO drive, with the data stored therein being used for the selection of an encryption method. The selection of an encryption method signifies arbitrary selection from DES, RC4, IDEA and others.

The personal computer 20 and the CD-R/RW drive 22 are the same as those described above in the first modification of the first embodiment. The disc to be inserted thereinto is a disc initialized. Moreover, these apparatuses are connected to each other through cables 43a and 43b.

The CD-R/RW drive 22 and the cables 43a and 43b are the same as those mentioned above, and the repeated description thereof will be omitted.

In the readout 22a of the CD-R/RW drive 22, a disc ID, MCN and ISRC serial number are read out as media numbers from the disc inserted thereinto, and the media numbers read out are inputted through the cable 43b to the personal computer 20 where the encryption key producing means 20b produces an encryption key according to an encryption method depending upon the data inputted from the peripheral storage equipment 35.

The encryption key producing methods in this case are the same as those described above in the first embodiment (see FIGs. 39 to 40). That is, it is possible that the encryption is made using a disc ID, MCN or ISRC serial number individually, or that the encryption is made using information on a combination of the disc ID, MCN and ISRC serial number. In addition, it is also possible that the encryption is made using a random function based on the disc ID, MCN or ISRC serial number, or that the encryption is made using a random function based on information on a combination of the disc ID, MCN and ISRC serial number. Still additionally, it is also possible that the encryption is made using a hash function based on a key message, disc ID, MCN or ISRC serial number, or that the encryption is made using a hash function based on information on a combination of the key message, disc ID, MCN and ISRC serial number.

The encrypted media information generating means 20a of the personal computer 20 makes encrypted data through the use of the encryption key and outputs it, and the encrypted media information preserving means 22b of the CD-R/RW drive 22 preserves it in the data area (see FIG. 1) of a write disc.

In this case, a user, who manipulates this encryption/decryption recording equipment 40b, inputs data for another encryption through the cable 43a to the personal computer 20 from the peripheral storage equipment 35. The employment of a different encryption method enables a change in encryption key.

Furthermore, the decryption from a write disc or a read disc is made as follows. That is, the second readout means 22c of the CD-R/RW drive 22 reads out the disc ID, MCN and ISRC serial number, and the decryptionmeans 20c of the personal computer 20 decrypts the encrypted data on the write disc or the read disc through the use of the encryption key.

With this arrangement, the user can use a program or the like for changing the encryption method stored in the encryption/decryption recording equipment 40b, and uses it to make the copy of digital data encrypted for the prevention of the illegal copy of the CD-R/RW.

That is, for example, when changing the encryption method from the DES to the RC4, the user takes out a program or the like for that encryption from the peripheral storage equipment 35. This change can be made without any limitation.

Moreover, as well as mentioned above, when a user makes the first copy, the digital data is read and encrypted with an encryption key unique to the disc, thereby presenting one specific disc to the user.

Conversely, even if the user attempts to make the copy from the specific disc to another disc, the difference from the media numbers (disc ID, MCN, ISRC serial number) needed for the decryption of the encrypted data stored on the specific disc takes place so that it is impossible to restore the original digital data.

Thus, since the encryption method is diversely changeable as needed as described above, the concealment of the encryption key is maintainable, thus providing an added resistance of the encryption key.

Still additionally, although the copyrighted digital data including music or movie can be copied only once to one disc, the secondary copy from the copy disc to another disc is inhibited, thereby protecting the copyrighted data. Thus, it is possible to protect the copyrighted data without adding a copyright fee to the recording/readout equipment.

Moreover, since, in the recording of an encryption key, the data forming the encryption key are recorded in the existing areas in a state distributed and the data recorded in a state distributed are collected to produce the encryption key, the encryption can be made without altering the formatting method on the disc. And still, since the distributing manner on the disc is diversely variable as needed, it is possible to provide an enhanced resistance of the encryption key.

Still moreover, since the encryption is made through the use of a random function Rnd () or a hash function Hash (), the same encryption keys are obtainable from the same disc IDs or the like, and the decoding of the original disc ID or the like becomes unattainable, which contributes to an added concealment.

### (D) Others

The present invention is not limited to the above-described embodiments and modifications thereof, and it is intended to cover all changes thereof which do not depart from the spirit and scope of the invention.

First, the above-described way of combinations for an encryption key according to the difference in length of the encryption key are also attainable in other modes. There is a possibility that the disc ID cannot be read depending on hardware, and in this case, two kinds: an MCN and a serial number of the ISRC, can be used in a state combined with each other, which enables simple encryption.

In addition, as the disadvantages of the MD method, the logical grounds on safety have not been established yet and difficulty is experienced in employing parallel processing. Still additionally, for the use of a 128-bit hash algorithm (MD5), the probability of generating the same message digest lowers, and for this reason, preferably, a combination with the original disc ID or the like has a bit length more than 128 bits.

Moreover, in the present invention, the term "user" used here signifies not only secondary makers, consumer and others, but also people who uses an initialized disc for recording data or the like.

Still moreover, the line 36 mentioned in the first modification of the first embodiment includes lines such as a so-called dial-up connection using a telephone line in addition to local area networks. As a location where an encryption key is produce for the encryption, it is also possible to use the personal computer 20 in place of the Internet server 23. In this case, only the encryption key is transmitted to the Internet server 23. And still, in this case, it is also possible to make the interchange in information between a data transmission equipment and a receive terminal in a communication karaoke.

Furthermore, for the line 36a making a connection between the data transmission equipment 26 and the personal computer 20 described in the secondmodification of the first embodiment, in addition to the serial port, other ports can also be put to use, and radio data transmission is also acceptable.

Still furthermore, as the AV equipment 34 in the first modification of the second embodiment, in addition to the video readout equipment, it can be an radio wave receiver for satellite broadcasting or ground wave, or a home-use terminal for CATV or the like.

Moreover, in FIGs. 8, 9 and 10, the "channel" shown signifies a channel, and the meaning thereof are the same. In FIG. 14, the "PC" shown signifies the personal computer 20. In FIGs. 14, 16 and 18, the "encryption key" shown means an encryption key. In FIGs. 24, 25 and 26, the "Φ" is a symbol representing a diameter in units of millimeter.

In the above description, although a CD-R/RW has been taken as an example, the present invention is limited to this CD-R/RW, but is also applicable to other media. disc information can also be recorded even in an administration area of media such as DVD-R, DVD-RAM, DVD-RW and others. In the case of a two-lay type medium or a double-faced type medium, the administration can be placed in only one layer or one surface, or in each layer or each surface.

### Industrial Applicability

As described above, according to the present invention, since a user cannot make the secondary copy of copyrighted data such as music, movie and computer program data, it is possible to achieve sufficient protection of works. In addition, it is possible to protect the copyrighted data without adding a copyright fee previously to a recording/readout equipment. Still additionally, encryption can be made without altering the existing disc formatting method, and the concealment of an encryption key is maintainable and an added resistance of the encryption key is attainable.

## Claims

1. A method of encrypting a media information to be recorded on a compact disc (10, 10') having
- an administration area (11) readable by a reading device but inaccessible to a user and
- a data area (12b) readable by the reading device and arbitrarily accessible to the user,
comprising the step of recording in the administration area (11) a disc identification information (disc ID) for encryption,
**characterized by**
• recording in the data area (12b) the disc identification information (disc ID) and a media identification number information (MCN) in a Q-channel subcode mode 2 and
• recording in the data area (12b) a serial number information (ISRC serial number) in a Q-channel subcode mode 3,
• wherein the encryption of the media information is accomplished by the use of
- a combination of the disc identification information (disc ID) and the media identification number information (MCN) recorded in the frame in the Q-channel subcode mode 2, or
- a combination of the disc identification information (disc ID) and the serial number information (ISRC serial number) recorded in the frame in the Q-channel subcode mode 3, or
- a combination of the disc identification information (disc ID), the media identification number information (MCN) recorded in the frame in the Q-channel subcode mode 2, and the serial number information (ISRC serial number) recorded in the frame in the Q-channel subcode mode 3.

2. A method according to claim 1, **characterized in that** the media information including one of audio, visual and data information, which is recordable in the data area (12b) as encrypted media information obtained by an encryption based on an encryption key produced by using at least the disc identification information (disc ID), and the media identification number information (MCN), wherein the media identification number information (MCN) is recorded in a state distributed in the data area (12b).

3. A method according to claim 1 or 2, **characterized in that** the compact disc (10, 10') is of an optically recorded type.

4. A method according to any one of claims 1 to 3, **characterized in that** the data area (12b) permits the user to make writing at least once.

5. An encryption equipment with
- readout means (22a, 42a) capable of reading out at least a disc identification information (disc ID) from a compact disc (10, 10', 21a, 21b, 31 a, 31b) having an administration area (11) readable by a reading device but inaccessible to a user, and a data area (12b) readable by the reading device and arbitrarily accessible to the user, wherein the disc identification information (disc ID) for encryption is recorded in the administration area (11),
- encryption key producing means (23b, 42e) capable of generating an encryption key on the basis of at least the disc identification information (disc ID),
- encrypted media information generating means (23a, 42b) capable of encrypting media information including one of audio, visual and data information by means of the encryption key and outputting the media information as encrypted media information (14) to the data area (12b), and
- encrypted media information preserving means (22b, 42c) capable of preserving the encrypted media information (14) in the data area (12b) of a compact disc (10, 10', 21a, 21b, 31a, 31b) having the same disc identification information (disc ID),
**characterized in that**
the encryption key producing means (23b, 42e) are capable of generating the encryption key on the basis of
- a combination of the disc identification information (disc ID) and the media identification number information (MCN) recorded in the frame in the Q-channel subcode mode 2, or
- a combination of the disc identification information (disc ID) and the serial number information (ISRC serial number) recorded in the frame in the Q-channel subcode mode 3, or
- a combination of the disc identification information (disc ID), the media identification number information (MCN) recorded in the frame in the Q-channel subcode mode 2, and the serial number information (ISRC serial number) recorded in the frame in the Q-channel subcode mode 3.

6. An encryption equipment according to claim 5, **characterized in that** the encryption equipment is an audio/visual/data equipment.

7. A decryption equipment for decrypting encrypted data recorded on a compact disc (10, 10', 21a, 21b, 31a, 31b) through a method of encrypting data as claimed in claim 1, having
readout means (22c, 42d) capable of reading out at least the disc identification information from the compact disc (10, 10', 21a, 21b, 31a, 31b), and
encryption key producing means (20d, 42e) capable of generating an encryption key on the basis of at least the disc identification information (disc ID),
**characterized by**
decryption means (20c, 42f) capable of decrypting the encrypted data using the encryption key producing means (20d, 42e) on the basis of
- a combination of the disc identification information (disc ID) and the media identification number information (MCN) recorded in the frame in the Q-channel subcode mode 2, or
- a combination of the disc identification information (disc ID) and the serial number information (ISRC serial number) recorded in the frame in the Q-channel subcode mode 3, or
- a combination of the disc identification information (disc ID), the media identification number information (MCN) recorded in the frame in the Q-channel subcode mode 2, and the serial number information (ISRC serial number) recorded in the frame in the Q-channel subcode mode 3.

8. A decryption equipment according to claim 7, **characterized in that** the decryption equipment is an audio/visual/data equipment.

## Patentansprüche

1. Verfahren zum Verschlüsseln einer Medieninformation, die auf eine Compact-Disk (10, 10') aufzuzeichnen ist, die aufweist
- ein Verwaltungsgebiet (11), das von einer Lesevorrichtung gelesen werden kann aber für einen Benutzer nicht zugänglich ist, und
- ein Datengebiet (12b), das von der Lesevorrichtung gelesen werden kann und für den Benutzer beliebig zugänglich ist,
umfassend den Schritt des Aufzeichnens einer Scheiben-Identifikationsinformation (Scheiben-ID) für die Verschlüsselung im Verwaltungsgebiet (11),
**gekennzeichnet durch**
- Aufzeichnen der Scheibenidentifikationsinformation (Scheiben-ID) und einer Medienidentifikationsnummerninformation (MCN) in einem Q-Kanal-Unterkode Modus 2, und
- Aufzeichnen einer Seriennummerninformation (ISRC-Seriennummer) in einem Q-Kanal-Unterkode Modus 3,
- wobei die Verschlüsselung der Medieninformation erzielt wird **durch** die Verwendung von
- einer Kombination der Scheibenidentifikationsinformation (Scheiben-ID) und der Medienidentifikationsnummerninformation (MCN), die im Rahmen im Q-Kanal-Unterkode Modus 2 aufgezeichnet ist, oder
- einer Kombination der Scheibenidentifikationsinformation (Scheiben-ID) und der Seriennummerninformation (ISRC-Seriennummer), die im Rahmen im Q-Kanal-Unterkode Modus 3 aufgezeichnet ist, oder
- einer Kombination der Scheibenidentifikationsinformation (Scheiben-ID), der Medienidentifikationsnummerninformation (MCN), die im Rahmen im Q-Kanal-Unterkode Modus 2 aufgezeichnet ist, und der Seriennummerninformation (ISRC-Seriennummer), die im Rahmen im Q-Kanal-Unterkode Modus 3 aufgezeichnet ist.

2. Verfahren nach Anspruch 1, **dadurch gekennzeichnet, dass** die Medieninformation Audioinformation, visuelle Information oder Dateninformation einschließt, die im Datengebiet (12b) als verschlüsselte Medieninformation aufgezeichnet werden kann, die durch eine Verschlüsselung auf der Basis eines Verschlüsselungsschlüssels erhalten werden kann, der unter Verwendung von mindestens der Scheibenidentifikationsinformation (Scheiben-ID) und der Medienidentifikationsnummerninformation (MCN) erzeugt wird, wobei die Medienidentifikationsnummerninformation (MCN) in einem verteilten Zustand im Datengebiet (12b) aufgezeichnet wird.

3. Verfahren nach Anspruch 1 oder 2, **dadurch gekennzeichnet, dass** die Compact-Disk (10, 10') vom optischen Aufzeichnungstyp ist.

4. Verfahren nach einem der Ansprüche 1 bis 3, **dadurch gekennzeichnet, dass** das Datengebiet (12b) es dem Benutzer ermöglicht, mindestens einmal ein Schreiben auszuführen.

5. Verschlüsselungsausrüstung mit
- einem Auslesemittel (22a, 42a), das mindestens eine Scheibenidentifikationsinformation (Scheiben-ID) aus einer Compact-Disk (10, 10', 21a, 21b, 31a, 31b), die ein Verwaltungsgebiet (11), das von einer Lesevorrichtung gelesen werden kann aber für einen Benutzer nicht zugänglich ist, und ein Datengebiet (12b), das von der Lesevorrichtung ausgelesen werden kann und für den Benutzer beliebig zugänglich ist, aufweist, auslesen kann, wobei die Scheibenidentifikationsinformation (Scheiben-ID) für die Verschlüsselung im Verwaltungsgebiet (11) aufgezeichnet ist,
- einem Mittel (23b, 42e) zum Erzeugen eines Verschlüsselungsschlüssels, das einen Verschlüsselungsschlüssel auf der Basis von mindestens der Scheibenidentifikationsinformation (Scheiben-ID) erzeugen kann,
- einem Mittel (23a, 42b) für das Erzeugen verschlüsselter Medieninformation, das Medieninformation, die Audioinformation, visuelle Information oder Dateninformation einschließt, mittels des Verschlüsselungsschlüssels verschlüsseln und die Medieninformation als verschlüsselte Medieninformation (14) an das Datengebiet (12b) ausgeben kann, und
- einem Mittel (22b, 42c) zum Speichern der verschlüsselten Medieninformation, das die verschlüsselte Medieninformation (14) im Datengebiet (12b) einer Compact-Disk (10, 10', 21a, 21b, 31a, 31b), die dieselbe Scheibenidentifikationsinformation (Scheiben-ID) aufweist, speichern kann,
**dadurch gekennzeichnet, dass**
das Mittel (23b, 42e) zur Erzeugung des Verschlüsselungsschlüssels den Verschlüsselungsschlüssel erzeugen kann auf der Basis von
- einer Kombination der Scheibenidentifikationsinformation (Scheiben-ID) und der Medienidentifikationsnummeminformation (MCN), die im Rahmen im Q-Kanal-Unterkode Modus 2 aufgezeichnet ist, oder
- einer Kombination der Scheibenidentifikationsinformation (Scheiben-ID) und der Seriennummerninformation (ISRC-Seriennummer), die im Rahmen im Q-Kanal-Unterkode Modus 3 aufgezeichnet ist, oder
- einer Kombination der Scheibenidentifikationsinformation (Scheiben-ID), der Medienidentifikationsnummeminformation (MCN), die im Rahmen im Q-Kanal-Unterkode Modus 2 aufgezeichnet ist, und der Seriennummerninformation (ISRC-Seriennummer), die im Rahmen im Q-Kanal-Unterkode Modus 3 aufgezeichnet ist.

6. Verschlüsselungsausrüstung nach Anspruch 5, **dadurch gekennzeichnet, dass** die Verschlüsselungsausrüstung eine Audio/Visuell/Daten-Ausrüstung ist.

7. Entschlüsselungsausrüstung für das Entschlüsseln verschlüsselter Daten, die auf einer Compact-Disk (10, 10', 21a, 21b, 31a, 31b) durch ein Verfahren der Verschlüsselung von Daten, wie es in Anspruch 1 beansprucht ist, aufgezeichnet sind, aufweisend:
- ein Auslesemittel (22c, 42d), das mindestens die Scheibenidentifikationsinformation aus der Compact-Disk (10, 10', 21a, 21b, 31a, 31b) auslesen kann, und
- ein Mittel (20d, 42e) zur Erzeugung eines Verschlüsselungsschlüssels, das einen Verschlüsselungsschlüssel auf der Basis von mindestens der Scheibenidentifikationsinformation (Scheiben-ID) erzeugen kann,
**gekennzeichnet durch**
ein Entschlüsselungsmittel (20c, 42f), das die verschlüsselten Daten unter Verwendung des Mittels (20d, 42e) zur Erzeugung des Verschlüsselungsschlüssels entschlüsseln kann, auf der Basis von
- einer Kombination der Scheibenidentifikationsinformation (Scheiben-ID) und der Medienidentifikationsnummerninformation (MCN), die im Rahmen im Q-Kanal-Unterkode Modus 2 aufgezeichnet ist, oder
- einer Kombination der Scheibenidentifikationsinformation (Scheiben-ID) und der Seriennummerninformation (ISRC-Seriennummer), die im Rahmen im Q-Kanal-Unterkode Modus 3 aufgezeichnet ist, oder
- einer Kombination der Scheibenidentifikationsinformation (Scheiben-ID), der Medienidentifikationsnummerninformation (MCN), die im Rahmen im Q-Kanal-Unterkode Modus 2 aufgezeichnet ist, und der Seriennummerninformation (ISRC-Seriennummer), die im Rahmen im Q-Kanal-Unterkode Modus 3 aufgezeichnet ist.

8. Entschlüsselungsausrüstung nach Anspruch 7, **dadurch gekennzeichnet, dass** die Entschlüsselungsausrüstung eine Audio/Visuell/Daten-Ausrüstung ist.

## Revendications

1. Procédé de cryptage d'une information de média devant être enregistrée sur un disque compact (10, 10') ayant
- une zone d'administration (11) lisible par un dispositif de lecture mais inaccessible à un utilisateur et
- une zone de données (12b) lisible par le dispositif de lecture et arbitrairement accessible à l'utilisateur,
comprenant l'étape d'enregistrer dans la zone d'administration (11) une information d'identification de disque (disc ID) pour cryptage,
**caractérisé par**
• l'enregistrement dans la zone de données (12b) de l'information d'identification de disque (disc ID) et d'une information de numéro d'identification de média (MCN) dans un mode de sous-code de canal Q 2 et
• l'enregistrement dans la zone de données (12b) d'une information de numéro de série (numéro de série ISRC) dans un mode de sous-code de canal Q 3,
• dans lequel le cryptage de l'information de média est accompli par l'utilisation de
- une combinaison de l'information d'identification de disque (disc ID) et de l'information de numéro d'identification de média (MCN) enregistrée dans la trame dans le mode de sous-code de canal Q 2, ou
- une combinaison de l'information d'identification de disque (disc ID) et de l'information de numéro de série (numéro de série ISRC) enregistrée dans la trame dans le mode de sous-code de canal Q 3, ou
- une combinaison de l'information d'identification de disque (disc ID), de l'information de numéro d'identification de média (MCN) enregistrée dans la trame dans le mode de sous-code de canal Q 2, et de l'information de numéro de série (numéro de série ISRC) enregistrée dans la trame dans le mode de sous-code de canal Q 3.

2. Procédé selon la revendication 1, **caractérisé en ce que** l'information de média incluant l'une d'informations audio, visuelles et données, qui est enregistrable dans la zone de données (12b) comme information de média cryptée obtenue par un cryptage basé sur une clé de cryptage produite en utilisant au moins l'information d'identification de disque (disc ID), et l'information de numéro d'identification de média (MCN), dans lequel l'information de numéro d'identification de média (MCN) est enregistrée en un état distribué dans la zone de données (12b).

3. Procédé selon la revendication 1 ou 2, **caractérisé en ce que** le disque compact (10, 10') est d'un type enregistré optiquement.

4. Procédé selon l'une quelconque des revendications 1 à 3, **caractérisé en ce que** la zone de données (12b) permet à l'utilisateur d'effectuer une écriture au moins une fois.

5. Équipement de cryptage avec
- un moyen de lecture (22a, 42a) capable de lire au moins une information d'identification de disque (disc ID) à partir d'un disque compact (10, 10', 21a, 21b, 31a, 31b) ayant une zone d'administration (11) lisible par un dispositif de lecture mais inaccessible à un utilisateur, et une zone de données (12b) lisible par le dispositif de lecture et arbitrairement accessible à l'utilisateur, dans lequel l'information d'identification de disque (disc ID) pour cryptage est enregistrée dans la zone d'administration (11),
- un moyen de production de clé de cryptage (23b, 42e) capable de générer une clé de cryptage sur la base d'au moins l'information d'identification de disque (disc ID),
- un moyen de génération d'information média cryptée (23a, 42b) capable de crypter une information média incluant l'une d'informations audio, visuelles et données au moyen de la clé de cryptage et de délivrer en sortie l'information média comme information média cryptée (14) à la zone de données (12b), et
- un moyen de préservation d'information média cryptée (22b, 42c) capable de préserver l'information média cryptée (14) dans la zone de données (12b) d'un disque compact (10, 10', 21 a, 21 b, 31 a, 31 b) ayant la même information d'identification de disque (disc ID),
**caractérisé en ce que**
le moyen de production de clé de cryptage (23b, 42e) est capable de générer la clé de cryptage sur la base de
- une combinaison de l'information d'identification de disque (disc ID) et de l'information de numéro d'identification de média (MCN) enregistrée dans la trame dans le mode de sous-code de canal Q 2, ou
- une combinaison de l'information d'identification de disque (disc ID) et de l'information de numéro de série (numéro de série ISRC) enregistrée dans la trame dans le mode de sous-code de canal Q 3, ou
- une combinaison de l'information d'identification de disque (disc ID), de l'information de numéro d'identification de média (MCN) enregistrée dans la trame dans le mode de sous-code de canal Q 2, et de l'information de numéro de série (numéro de série ISRC) enregistrée dans la trame dans le mode de sous-code de canal Q 3.

6. Équipement de cryptage selon la revendication 5, **caractérisé en ce que** l'équipement de cryptage est un équipement audio/visuel/données.

7. Équipement de décryptage pour décrypter des données cryptées enregistrées sur un disque compact (10, 10', 21a, 21b, 31a, 31b) par l'intermédiaire d'un procédé de cryptage de données selon la revendication 1, ayant
un moyen de lecture (22c, 42d) capable de lire au moins l'information d'identification de disque à partir du disque compact (10, 10', 21a, 21 b, 31 a, 31 b), et
un moyen de production de clé de cryptage (20d, 42e) capable de générer une clé de cryptage sur la base d'au moins l'information d'identification de disque (disc ID),
**caractérisé par**
un moyen de décryptage (20c, 42f) capable de décrypter les données cryptées en utilisant le moyen de production de clé de cryptage (20d, 42e) sur la base de
- une combinaison de l'information d'identification de disque (disc ID) et de l'information de numéro d'identification de média (MCN) enregistrée dans la trame dans le mode de sous-code de canal Q 2, ou
- une combinaison de l'information d'identification de disque (disc ID) et de l'information de numéro de série (numéro de série ISRC) enregistrée dans la trame dans le mode de sous-code de canal Q 3, ou
- une combinaison de l'information d'identification de disque (disc ID), de l'information de numéro d'identification de média (MCN) enregistrée dans la trame dans le mode de sous-code de canal Q 2, et de l'information de numéro de série (numéro de série ISRC) enregistrée dans la trame dans le mode de sous-code de canal Q 3.

8. Équipement de décryptage selon la revendication 7, **caractérisé en ce que** l'équipement de décryptage est un équipement audio/visuel/données.
